(19) 

Europäisches
Patentamt
European
Patent Office
Office européen
des brevets

(11) **EP 2 813 936 A1**

(12) **EUROPEAN PATENT APPLICATION**
published in accordance with Art. 153(4) EPC

(43) Date of publication:
**17.12.2014 Bulletin 2014/51**

(21) Application number: **12867985.9**

(22) Date of filing: **11.12.2012**

(51) Int Cl.:
*G06F 3/0488* (2013.01)   *G06F 3/023* (2006.01)
*G06F 3/041* (2006.01)   *H03M 11/04* (2006.01)

(86) International application number:
**PCT/JP2012/007905**

(87) International publication number:
**WO 2013/118226 (15.08.2013 Gazette 2013/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **07.02.2012 JP 2012023748**

(71) Applicant: **NEC CASIO Mobile Communications,
Ltd.**
**Kawasaki-shi, Kanagawa 211-8666 (JP)**

(72) Inventor: **AOKI, Noriyuki**
**Kawasaki-shi, Kanagawa 211-8666 (JP)**

(74) Representative: **Vossius & Partner**
**Siebertstrasse 4**
**81675 München (DE)**

(54) **INFORMATION PROCESSING DEVICE, DISPLAY FORM CONTROL METHOD, AND
NONTEMPORARY COMPUTER-READABLE MEDIUM**

(57)   Provided is a technique for improving the usability when a software keyboard is divided and displayed on a touch screen display. A tablet computer (1) includes: a display (12) including a display screen (S); a touch sensor (13) that detects a user operation on the display screen (S); and a keyboard display control unit (30) that causes a software keyboard (SK) including a plurality of software keys (k) to be displayed on the display screen (S). The keyboard display control unit (30) divides and displays the software keyboard (SK) on the display screen (S) and controls a display form of the division display of the software keyboard (SK) based on the operation detected by the touch sensor (13).

Fig. 11

**Description**

**Technical Field**

The present invention relates to an information processing device, a display form control method, and a non-transitory computer readable medium.

**Background Art**

As a technique of this type, Patent Literature 1 discloses a portable personal computer including a touch panel display. According to Patent Literature 1, a software keyboard is divided and displayed on the touch screen display.

**Citation List**

**Patent Literature**

[Patent Literature 1] Japanese Unexamined Patent Application Publication No. 2011-248411

**Summary of Invention**

**Technical Problem**

While the technique for dividing and displaying a software keyboard on a touch screen display is well known as in Patent Literature 1, there is some room for improvement in the usability of such a division display.
It is an object of the present invention to provide a technique for improving the usability of a division display when a software keyboard is divided and displayed on a touch screen display.

**Solution to Problem**

According to an aspect of the present invention, an information processing device is provided including: display means including a display screen; operation detection means for detecting a user operation on the display screen; and software keyboard display control means for causing a software keyboard including a plurality of software keys to be displayed on the display screen. The software keyboard display control means divides the software keyboard, displays the divided software keyboard on the display screen, and controls a display form of the division display of the software keyboard based on the operation detected by the operation detection means.
According to another aspect of the invention, a display form control method for an information processing device is provided including: display means including a display screen; and operation detection means for detecting a user operation on the display screen, the display form control method including: controlling a display form of a division display of a software keyboard including a plurality of software keys based on the operation detected by the operation detection means, when the software keyboard is divided and displayed on the display screen.
According to still another aspect of the invention, a non-transitory computer readable medium storing a display form control program for an information processing device is provided including: display means including a display screen; and operation detection means for detecting a user operation on the display screen, the display form control program causing a computer to control a display form of a division display of a software keyboard including a plurality of software keys based on the operation detected by the operation detection means, when the software keyboard is divided and displayed on the display screen.

**Advantageous Effects of Invention**

According to the present invention, it is possible for a user to freely adjust a display form of a division display of a software keyboard so that the user can easily input data by using the software keyboard.

**Brief Description of Drawings**

Fig. 1 is a functional block diagram of a tablet computer (first exemplary embodiment);
Fig. 2 is an external perspective view of a tablet computer (second exemplary embodiment);

Fig. 3 is a functional block diagram of the tablet computer (second exemplary embodiment);

Fig. 4 is an image showing the creation of a new mail on a display screen which is vertically positioned (second exemplary embodiment);

Fig. 5 is an image showing a storage content of a storage unit (second exemplary embodiment);

Fig. 6 shows a first control flow of the tablet computer (second exemplary embodiment);

Fig. 7 shows a second control flow of the tablet computer (second exemplary embodiment);

Fig. 8 is an image showing a state before a software keyboard is divided on the display screen which is laterally positioned (second exemplary embodiment);

Fig. 9 is an image showing an operation for dividing the software keyboard on the display screen which is laterally positioned (second exemplary embodiment);

Fig. 10 is an image showing a storage content of the storage unit (second exemplary embodiment);

Fig. 11 is an image showing a division display of the software keyboard on the display screen which is laterally positioned (second exemplary embodiment);

Fig. 12 is an image showing an operation for changing the display size of the software keyboard on the display screen which is laterally positioned (second exemplary embodiment);

Fig. 13 is an image showing a storage content of the storage unit (second exemplary embodiment);

Fig. 14 is an image showing a state where the display size of the software keyboard is changed on the display screen which is laterally positioned (second exemplary embodiment);

Fig. 15 is an image showing another operation for dividing the software keyboard on the display screen which is laterally positioned (a first modified example of the second exemplary embodiment);

Fig. 16 is an image showing still another operation for dividing the software keyboard on the display screen which is laterally positioned (a second modified example of the second exemplary embodiment);

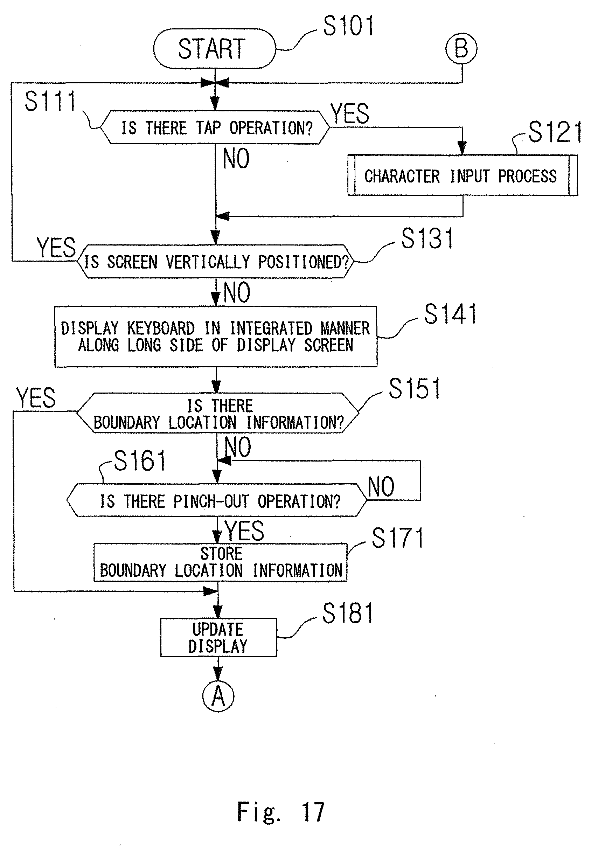

Fig. 17 shows another first control flow of the tablet computer (the second modified example of the second exemplary embodiment);

Fig. 18 is an image showing a storage content of a storage unit (third exemplary embodiment);

Fig. 19 shows a first control flow of a tablet computer (third exemplary embodiment);

Fig. 20 shows a second control flow of the tablet computer (third exemplary embodiment);

Fig. 21 is an image showing an operation for dividing a software keyboard on a display screen which is laterally positioned (third exemplary embodiment);

Fig. 22 is an image showing a storage content of the storage unit (third exemplary embodiment);

Fig. 23 is an image showing a division display of the software keyboard on the display screen which is laterally positioned (third exemplary embodiment);

Fig. 24 is an image showing the division display of the keyboard on the display screen which is vertically positioned (third exemplary embodiment);

Fig. 25 is a function block diagram of the tablet computer (first input interface example);

Fig. 26 is an image showing the creation of a new mail on the display screen which is laterally positioned (first input interface example);

Fig. 27 shows a control flow of the tablet computer (first input interface example);

Fig. 28 is an image showing a state where a Hiragana character is input on the display screen which is laterally positioned (first input interface example);

Fig. 29 is an image showing a state where another conversion candidate is selected on the display screen which is laterally positioned (first input interface example);

Fig. 30 is an image showing a state where the selected conversion candidate is inserted into the text of a mail on the display screen which is laterally positioned (first input interface example);

Fig. 31 is a functional block diagram of the tablet computer (second input interface example);

Fig. 32 is an image showing the creation of a new mail on the display screen which is laterally positioned (second input interface example);

Fig. 33 shows a control flow of the tablet computer (second input interface example);

Fig. 34 is an image showing a state where a Hiragana character is input on the display screen which is laterally positioned (second input interface example);

Fig. 35 is an image showing a state where the attribute of a character is changed on the display screen which is laterally positioned (second input interface example);

Fig. 36 is an image showing a state where the selected conversion candidate is inserted into the text of a mail on the display screen which is laterally positioned (second input interface example);

Fig. 37 is a function block diagram of the tablet computer (third input interface example);

Fig. 38 is an image showing the creation of a new mail on the display screen which is laterally positioned (third input interface example);

Fig. 39 shows a control flow of the tablet computer (third input interface example);

Fig. 40 is an image showing a state where an alphabetic character is input by a handwriting pad on the display screen which is laterally positioned (third input interface example);
Fig. 41 is a functional block diagram of the tablet computer (fourth input interface example);
Fig. 42 is an image showing the creation of a new mail on the display screen which is laterally positioned (fourth input interface example); and
Fig. 43 shows a control flow of the tablet computer (fourth input interface example).

**Description of Embodiments**

(First exemplary embodiment)

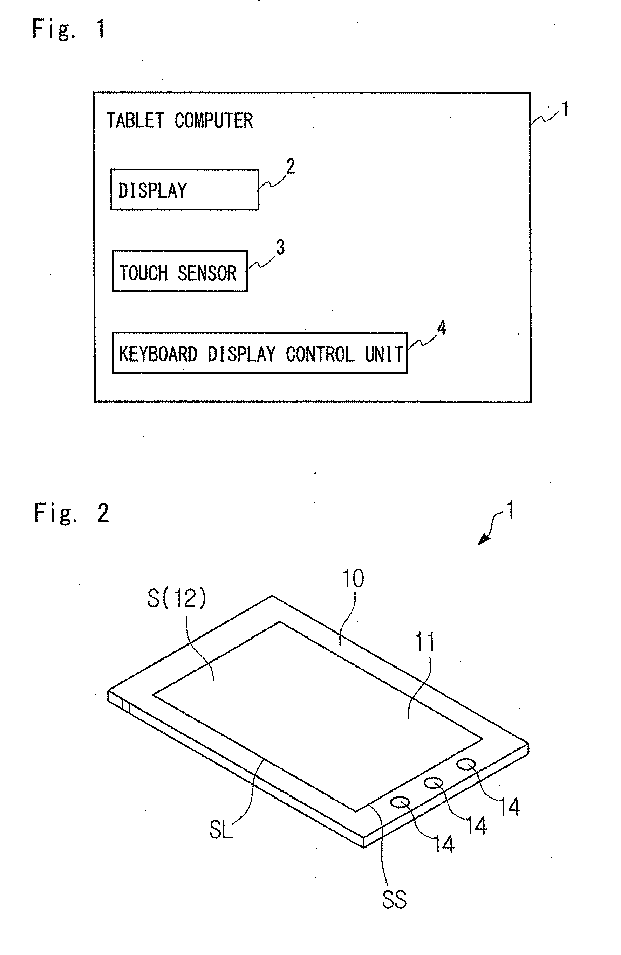

A first exemplary embodiment of the present invention will be described below with reference to Fig. 1. As shown in Fig. 1, a tablet computer 1 (information processing device) includes a display 2 (display means), a touch sensor 3 (operation detection means), and a keyboard display control unit 4 (software keyboard display control means).

The display 2 includes a display screen. The touch sensor 3 detects a user operation on the display screen. The keyboard display control unit 4 displays a software keyboard including a plurality of software keys on the display screen. The keyboard display control unit 4 divides the software keyboard, displays the divided software keyboard on the display screen, and controls a display form of the division display of the software keyboard based on the operation detected by the touch sensor 3.

The above-described configuration makes it possible for a user to adjust the display form of the division display of the software keyboard so that the user can easily input data by using the software keyboard.

Not only the tablet computer 1, but also a smartphone or a laptop personal computer can be used as the information processing device.

(Second exemplary embodiment)

Next, a second exemplary embodiment of the present invention will be described with reference to Figs. 2 to 14.

As shown in Fig. 2, the tablet computer 1 (information processing device) includes a housing 10 having a substantially rectangular plate shape, and a touch screen display 11.

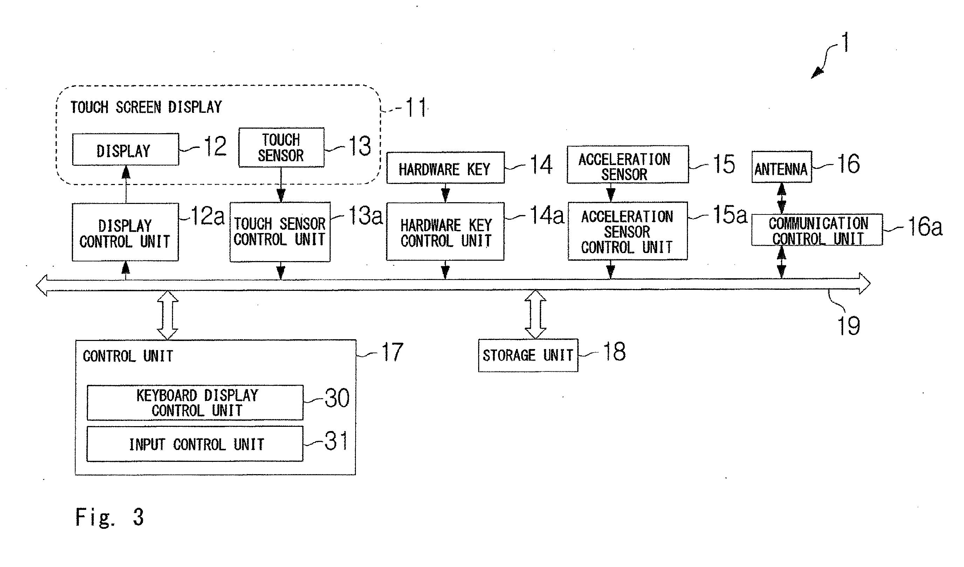

Specifically, as shown in Fig. 3, the tablet computer 1 includes a display 12 (display means), a display control unit 12a, a touch sensor 13 (operation detection means), a touch sensor control unit 13a, hardware keys 14, a hardware key control unit 14a, an acceleration sensor 15 (position detection means), an acceleration sensor control unit 15a, an antenna 16, a communication control unit 16a, a control unit 17, a storage unit 18, and a bus 19.

The display 12 is connected to the bus 19 via the display control unit 12a. The touch sensor 13 is connected to the bus 19 via the touch sensor control unit 13a. Each hardware key 14 is connected to the bus 19 via the hardware key control unit 14a. The acceleration sensor 15 is connected to the bus 19 via the acceleration sensor control unit 15a. The antenna 16 is connected to the bus 19 via the communication control unit 16a. The control unit 17 is connected to the bus 19. The storage unit 18 is connected to the bus 19.

The touch screen display 11 shown in Fig. 2 includes the display 12 and the touch sensor 13.

As shown in Fig. 2, the display 12 includes a display screen S capable of displaying characters, images, and the like. In this exemplary embodiment, the display screen S of the display 12 is formed in a rectangular shape with an aspect ratio of about 1.4, and has long sides SL and short sides SS. The display 12 is, for example, an LCD (Liquid Crystal Display), an organic EL (ElectroLuminescence) display, or an inorganic EL display.

The display control unit 12a causes characters, images, and the like to be displayed on the display screen S of the display 12 based on an image signal from the control unit 17.

The touch sensor 13 detects a user operation on the display screen S of the display 12. In this exemplary embodiment, a projected capacitive touch sensor capable of detecting multiple touches is used as the touch sensor 13. However, with the recent development in technology, surface capacitive and resistive touch sensors capable of detecting multiple touches have also been realized. Accordingly, a surface capacitive or resistive touch sensor may be used as the touch sensor 13, instead of the projected capacitive touch sensor.

Examples of the user operation on the display screen S of the display 12, which is detected by the touch sensor 13, include touching operations performed by the user on the display screen S of the display 12. The touching operations performed by the user are mainly classified as follows.

Tap (single tap): A touching operation in which the user taps the display screen S of the display 12 with a finger. This operation is equivalent to a click with a mouse.

Double-tap: A touching operation in which the user taps the screen twice during a short period of time. This operation is equivalent to a double-click with a mouse.

Drag: A touching operation in which the user moves his/her finger in the state where the finger is in contact with the display screen S of the display 12.

Flick: A touching operation in which the user flicks the display screen S with a finger in the state where the finger is in contact with the display screen S of the display 12.

Pinch: A touching operation in which the user operates the display screen S of the display 12 with two fingers at the same time.

Pinch-out: A touching operation in which the user spreads two fingers apart in the state where the two fingers are in contact with the display screen S of the display 12.

Pinch-in: A touching operation in which the user brings two fingers close to each other in the state where the two fingers are in contact with the display screen S of the display 12.

Examples of "sliding operation" include the above-mentioned "drag", "flick", and "pinch" operations.

The touch sensor control unit 13a generates a touch signal based on the content of the user operation on the display screen S of the display 12, which is detected by the touch sensor 13, and outputs the generated touch sensor to the control unit 17.

As shown in Fig. 2, the housing 10 of the tablet computer 1 is provided with, for example, three hardware keys 14. When any one of the hardware keys 14 is pressed, the hardware key control unit 14a generates a press-down signal corresponding to the pressed hardware key 14, and outputs the generated press-down signal to the control unit 17.

The acceleration sensor 15 detects the position of the display screen S of the display 12. The acceleration sensor 15 is composed of, for example, a three-axis acceleration sensor. The acceleration sensor control unit 15a generates a position signal based on the position of the display screen S of the display 12, which is detected by the acceleration sensor 15, and outputs the generated position signal to the control unit 17.

The communication control unit 16a generates a signal by encoding data output from the control unit 17, and outputs the generated signal from the antenna 16. Further, the communication control unit 16a generates data by decoding the signal received from the antenna 16, and outputs the generated data to the control unit 17.

The control unit 17 is composed of a computer including a CPU (Central Processing Unit), a ROM (Read Only Memory), and a RAM (Random Access Memory). The ROM stores a program. This program is loaded into the CPU and executed on the CPU, thereby allowing hardware, such as the CPU, to function as a keyboard display control unit 30 (software keyboard display control means) and an input control unit 31 (input control means).

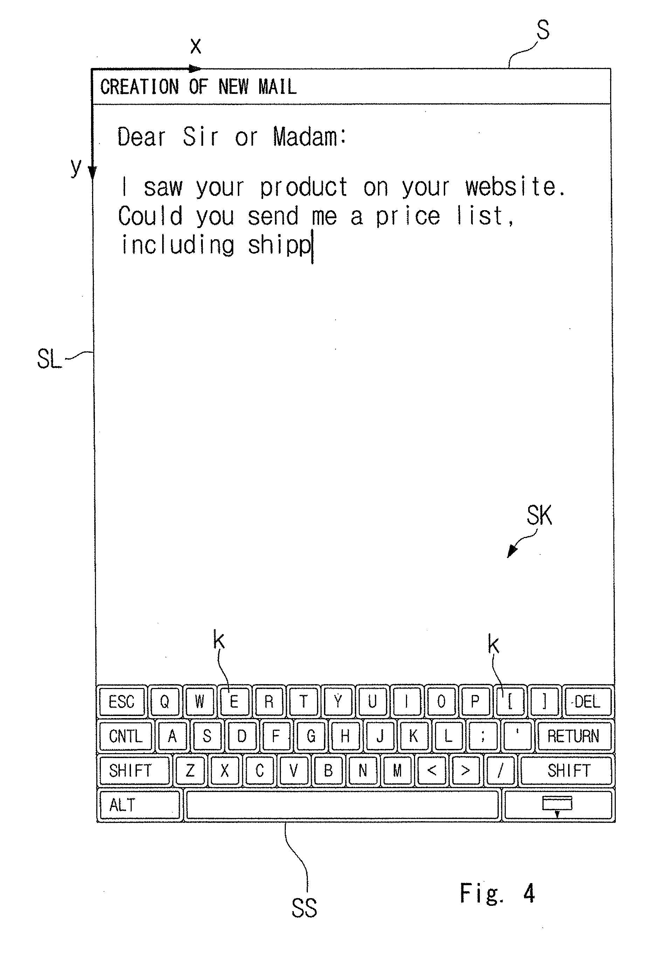

As shown in Fig. 4, the keyboard display control unit 30 causes a software keyboard SK including a plurality of software keys k to be displayed on the display screen S. The layout of the software keyboard SK is, for example, a QWERTY layout. The detailed operation of the keyboard display control unit 30 will be described later.

The input control unit 31 performs various processes based on the touch signal output from the touch sensor control unit 13a.

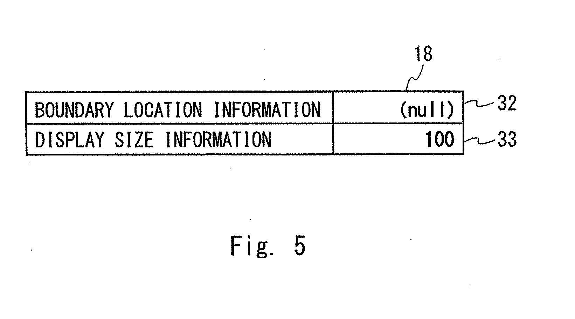

The storage unit 18 is composed of a RAM. As shown in Fig. 5, a storage area for storing boundary location information 32 and display size information 33 is secured in the storage unit 18. The boundary location information 32 is information that specifies the division boundary location when the software keyboard SK is divided and displayed on the display screen S. As shown in Fig. 4, assuming that the upper left corner of the display screen S is set as an origin when the long sides SL of the display screen S are parallel to the vertical direction and that a coordinate system having an x-axis pointing to the right and a y-axis pointing downward is defined in a fixed manner with respect to the display screen S, the boundary location information 32 indicates a single y-value. The initial value of the boundary location information 32 is a NULL value. The display size information 33 is information that specifies the size of the display when the software keyboard SK is displayed on the display screen S. The display size information 33 indicates a percentage value as a display ratio of enlargement/reduction from a predetermined size. The initial value of the display size information 33 is "100%". The boundary location information 32 and the display size information 33 constitute display form information that specifies the display form of the division display of the software keyboard SK.

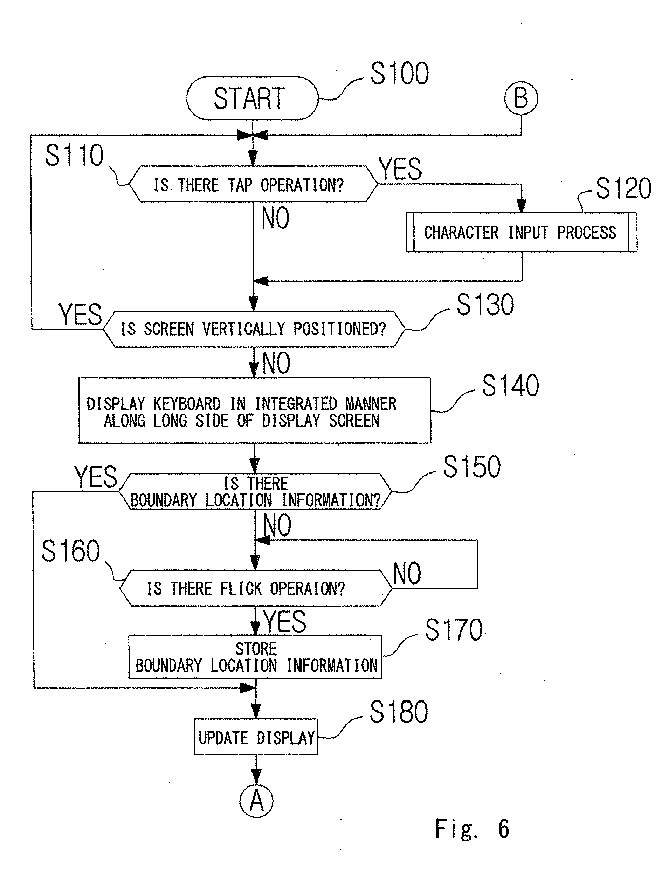

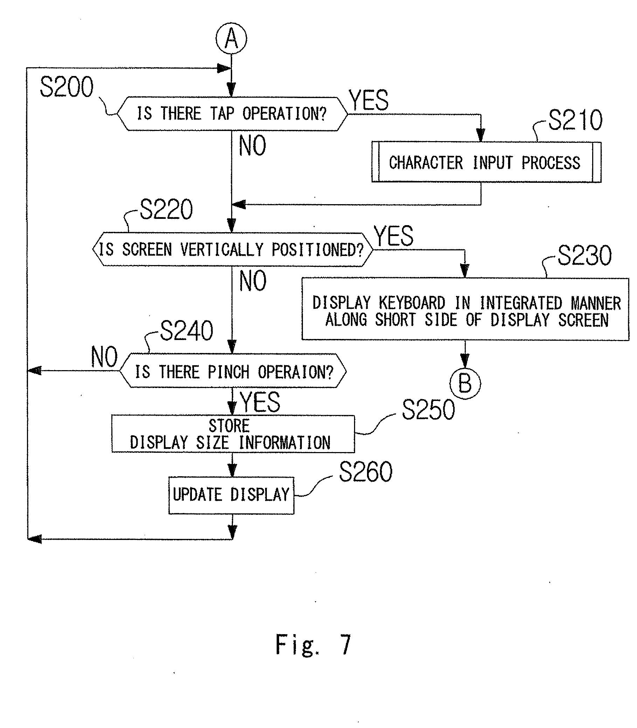

Next, the operation of the tablet computer 1 will be described with reference to control flows shown in Figs. 6 and 7.

First, Fig. 4 shows a state where the tablet computer 1 is powered on to start e-mail software and the user is creating a new mail. Referring to Fig. 4, the display screen S is vertically positioned (the long sides SL are parallel to the vertical direction). The software keyboard SK is displayed in an integrated manner along the short side SS of the display screen S (S100). In this state, the input control unit 31 determines whether there is a tap operation on the software keyboard SK, based on the touch signal from the touch sensor control unit 13a (S110). If it is determined that there is a tap operation on the software keyboard SK (S110: YES), the input control unit 31 acquires an operation location for the tap operation from the touch signal, performs a process for inputting a character corresponding to the acquired operation location (S120), and advances the process to S130. The process for inputting a character is a process for inserting a character into the text of the mail. Even when it is determined in S110 that there is no tap operation on the software keyboard SK (S110: NO), the input control unit 31 advances the process to S130.

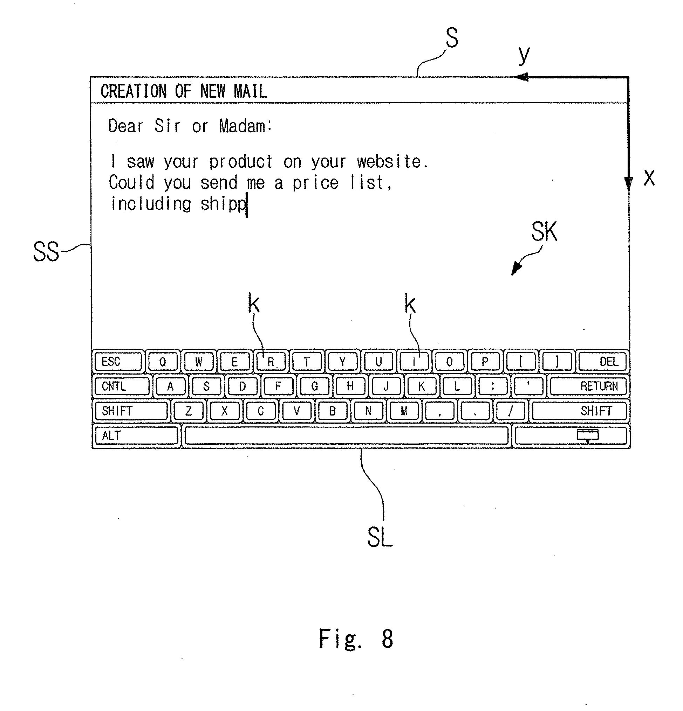

Next, the keyboard display control unit 30 determines whether the display screen S is vertically positioned (the long sides SL are parallel to the vertical direction), based on the position signal from the acceleration sensor control unit 15a (S130). When the keyboard display control unit 30 determines that the display screen S is vertically positioned (S130: YES), the keyboard display control unit 30 returns the process to S110. On the other hand, when the keyboard display control unit 30 determines that the display screen S is not vertically positioned (S130: NO), the keyboard display control unit 30 considers the display screen S to be laterally positioned (the short sides SS are parallel to the vertical direction), and displays the software keyboard SK in an integrated manner along the long side SL of the display screen S as shown in Fig. 8 (S140).

Next, the keyboard display control unit 30 refers to the storage unit 18 and determines whether the boundary location information 32 is stored (S150). If it is determined that some kind of boundary location information 32 is stored (S150: YES), the keyboard display control unit 30 advances the process to S180. If it is determined in S150 that the boundary location information 32 is not stored (S150: NO), the keyboard display control unit 30 advances the process to S160.

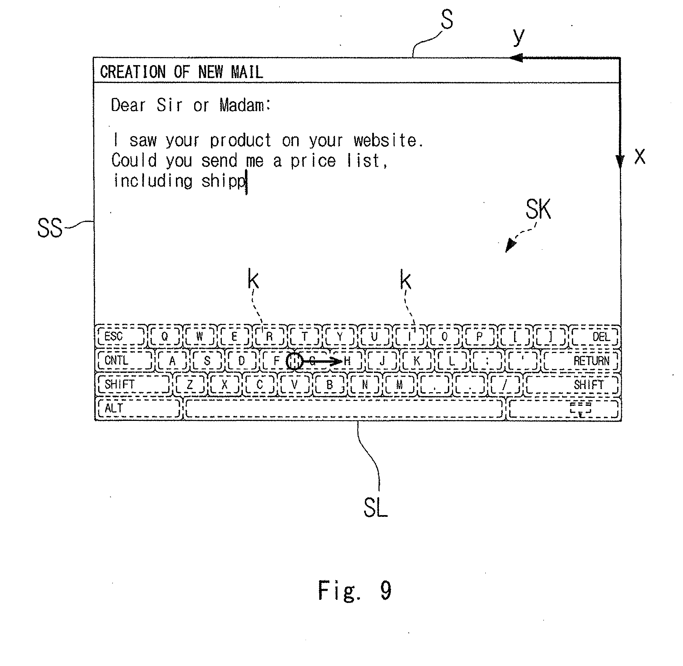

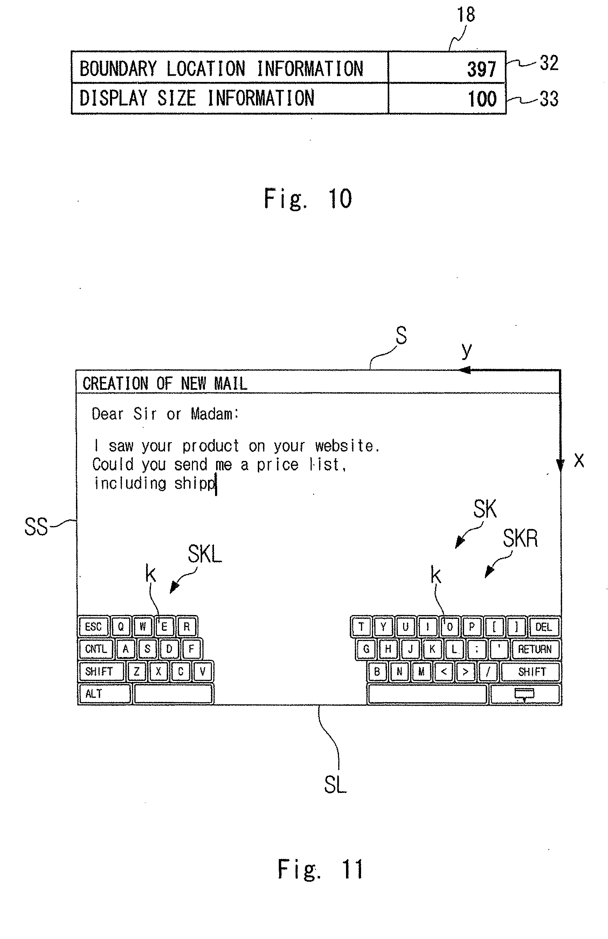

Next, the keyboard display control unit 30 waits until there is a flick operation on the software keyboard SK, based on the touch signal from the touch sensor control unit 13a (S160: NO). Fig. 9 shows an example of the flip operation on the software keyboard SK. Fig. 9 shows the flick operation in which the user touches the intermediate position between an "F" key and a "G" key with a finger and then flicks the finger toward an "H" key, as indicated by a thick line. In this case, the touch signal from the touch sensor control unit 13a includes a y-value indicating an initial touch position, and direction data that specifies the direction in which a flick operation is performed thereafter. If it is determined that there is a flick operation (S160: YES), as shown in Fig. 10, the keyboard display control unit 30 stores, as the boundary location information 32, the y-value indicating the initial touch position, which is included in the touch signal, into the storage unit 18 (S170), and advances the process to S180. In the example shown in Fig. 10, the boundary location information 32 is updated with "397".

Next, the keyboard display control unit 30 refers to the storage unit 18, divides and displays the software keyboard SK on the display screen S as shown in Fig. 11 (S180), and advances the process to S200 in Fig. 7.

Specifically, the keyboard display control unit 30 divides and displays the software keyboard SK on the display screen S based on the boundary location information 32 stored in the storage unit 18 (S180). As is obvious from a comparison between Figs. 9 to 11, the keyboard display control unit 30 displays, on the left side of the display screen S, the software keys k located at positions greater than "397" which is indicated by the boundary location information 32 as the center position of the software keys k, and the keyboard display control unit 30 displays, on the right side of the display screen S, the software keys k located at positions smaller than "397" which is indicated by the boundary location information 32 as the center position of the software keys k. For convenience of explanation, as shown in Fig. 11, the plurality of software keys k displayed on the left side of the display screen S are referred to as "left-side software key group SKL", and the plurality of software keys k displayed on the right side of the display screen S are referred to as "right-side software key group SKR".

Further, the keyboard display control unit 30 divides and displays the software keyboard SK on the display screen S based on the display size information 33 stored in the storage unit 18 (S180). Since the initial value of the display size information 33 is "100%" as described above, the keyboard display control unit 30 displays each software key k according to a preset display size.

In the state shown in Fig. 11, the user resumes the creation of a new mail. Specifically, in the state shown in Fig. 11, the input control unit 31 determines whether there is a tap operation on the software keyboard SK, based on the touch signal from the touch sensor control unit 13a (S200). If it is determined that there is a tap operation on the software keyboard SK (S200: YES), the input control unit 31 acquires an operation location for the tap operation from the touch signal, performs a process for inputting a character corresponding to the acquired operation location (S210), and advances the process to S220. Even when it is determined in S200 that there is no tap operation on the software keyboard SK (S200: NO), the input control unit 31 advances the process to S220.

Next, the keyboard display control unit 30 determines whether the display screen S is vertically positioned (the long sides SL are parallel to the vertical direction), based on the position signal from the acceleration sensor control unit 15a (S220). When it is determined that the display screen S is vertically positioned (S220: YES), the keyboard display control unit 30 displays the software keyboard SK in an integrated manner along the short side SS of the display screen S as shown in Fig. 4 (S230), and returns the process to S110 in Fig. 6. On the other hand, when it is determined that the display screen S is not vertically positioned (S220: NO), the process advances to S240.

Next, the keyboard display control unit 30 determines whether there is a pinch operation in a blank area between the left-side software key group SKL and the right-side software key group SKR, based on the touch signal from the touch sensor control unit 13a (S240). If it is determined that there is a pinch operation (S240: YES), the keyboard display control unit 30 stores, into the storage unit 18, a new display size, which is obtained based on the touch signal, as the display size information 33 (S250), and advances the process to S260.

In this case, the touch signal from the touch sensor control unit 13a includes y-values respectively corresponding to two initial touch positions, and y-values respectively corresponding to two last touch positions. Accordingly, the keyboard display control unit 30 obtains a new display size based on, for example, the following expression.

(new display size)=(current display size)×(difference between y-values respectively corresponding to two last touch positions)/(y-values respectively corresponding to two initial touch positions)

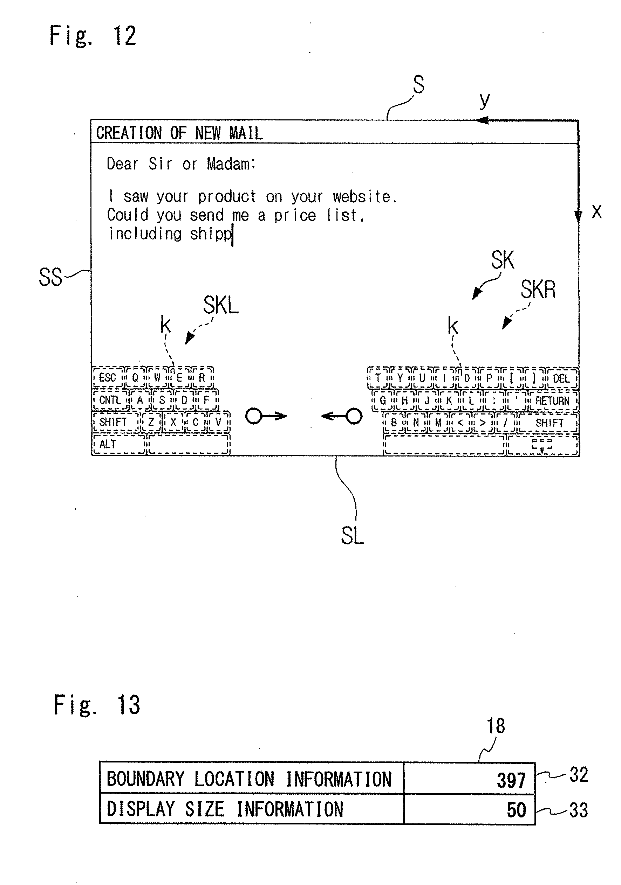

According to the above expression, in the pinch operation, a pinch-in operation means a reduced display and a pinch-out operation means an enlarged display. The pinch-in operation shown in Fig. 12 allows the display size information 33 to be updated with "50" as shown in Fig. 13.

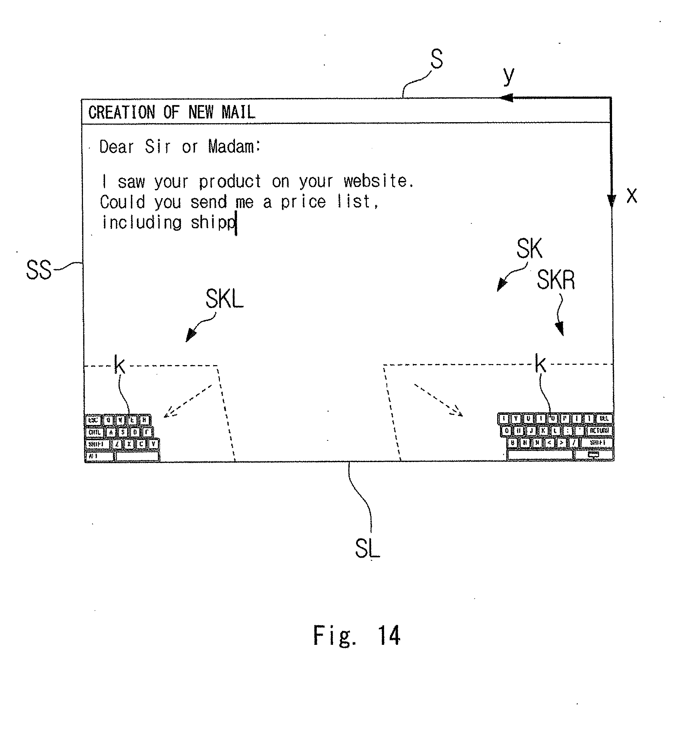

Next, the keyboard display control unit 30 refers to the storage unit 18, divides and displays the software keyboard SK on the display screen S as shown in Fig. 14 (S260), and returns the process to S200.

Specifically, the keyboard display control unit 30 divides and displays the software keyboard SK on the display screen S based on the display size information 33 stored in the storage unit 18. Since the updated value of the display size information 33 is "50%" as described above, the keyboard display control unit 30 displays the left-side software key group SKL and the right-side software key group SKR at 50% of the preset display size. In this case, as shown in Fig. 14, each software key k may be displayed in a reduced size with the aspect ratio maintained, or may be displayed by reducing only the width of each software key k in the longitudinal direction of the long side SL.

When it is determined in S240 that there is no pinch operation (S240: NO), the keyboard display control unit 30 returns the process to S200.

In sum, the second exemplary embodiment of the present invention described above has the following features.

(1) That is, the tablet computer 1 includes: the display 12 (display means) including the display screen S; the touch sensor 13 (operation detection means) that detects a user operation on the display screen S; and the keyboard display control unit 30 (software keyboard display control means) that causes the software keyboard SK including the plurality of software keys k to be displayed on the display screen S. The keyboard display control unit 30 divides the software keyboard SK, displays the divided software keyboard SK on the display screen S, and controls the display form of the division display of the software keyboard SK based on the operation detected by the touch sensor 13 (S150 to S180, S240 to S260). The above-described configuration allows the user to freely adjust the display form of the division display of the software keyboard SK so that the user can easily input data by using the software keyboard SK.

(2) Further, the keyboard display control unit 30 determines a boundary location of the divided software keyboard SK based on the operation detected by the touch sensor 13 (S150 to S180). The above-described configuration allows the user to determine the division location of the software keyboard SK. The software keys k to be operated with the right hand or the left hand vary widely between users. Accordingly, the software keyboard SK is divided and displayed at a boundary location suitable for each user, thereby improving the efficiency of inputting data using the software keyboard SK.

In the second exemplary embodiment described above, the user can freely determine the division location of the software keyboard SK merely by performing the flick operation once on the software keyboard SK, without performing a complicated touching operation for dividing and displaying the software keyboard SK. Therefore, the division operation is extremely intuitive.

When the user specifies the division boundary location of the software keyboard SK, the software keyboard may be divided in such a manner that a predetermined number of keys are included in both sides of the boundary location.

(4) Further, the keyboard display control unit 30 determines the display size of the software keyboard SK based on the operation detected by the touch sensor 13 (S240 to S260). The above-described configuration allows the user to determine the display size of the software keyboard SK. Since user's hands are of different sizes, the software keyboard SK is displayed in a size suitable for each user, thereby improving the efficiency of inputting data using the software keyboard SK.

(6) The tablet computer 1 further includes the acceleration sensor 15 (position detection means) that detects the position of the display screen S. The keyboard display control unit 30 chooses to display the software keyboard SK in an integrated manner on the display screen S, or to divide and display the software keyboard SK on the display screen S, depending on the position of the display screen S detected by the acceleration sensor 15 (S130 to S180, S220 to S230). The above-described configuration allows the software keyboard SK to be suitably displayed depending on the position of the display screen S. In the second exemplary embodiment described above, when the display screen S is vertically positioned (second position), the software keyboard SK is displayed in an integrated manner on the display screen S (S230), and when the display screen S is laterally positioned (first position), the software keyboard SK is divided and displayed on the display screen S (S180).

(9) The tablet computer 1 further includes the storage unit 18 (display form information storage means) that stores the display form information that specifies the display form of the division display of the software keyboard SK. When the software keyboard SK is divided and displayed on the display screen S, the keyboard display control unit 30 determines the display form of the division display of the software keyboard SK based on the display form information stored into the storage unit 18. The above-described configuration makes it possible to restore the display form of the division display of the software keyboard SK adjusted according to a user's intention.

(11) In the display form control method for the tablet computer 1 including: the display 12 including the display screen S; and the touch sensor 13 that detects a user operation on the display screen S, the display form of the division display of the software keyboard SK is controlled based on the operation detected by the touch sensor 13 when the software keyboard SK including the plurality of software keys k is divided and displayed on the display screen S (S150 to S180, S240 to S260).

(Second exemplary embodiment: First modified example)

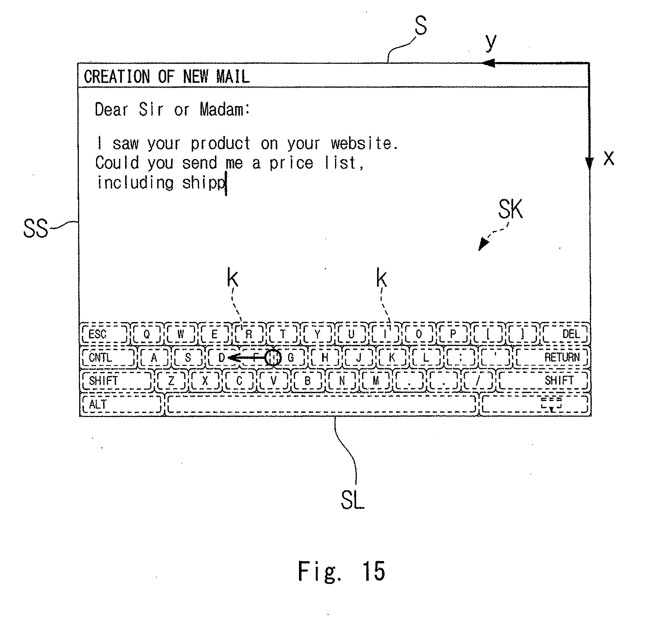

Next, a first modified example of the first exemplary embodiment will be described. In the first exemplary embodiment described above, Fig. 9 illustrates the flick operation in which the user touches the intermediate position between the "F" key and the "G" key with a finger and then flicks the finger toward the "H" key. Alternatively, as shown in Fig. 15, it is possible to perform a flick operation in which the user touches the intermediate position between the "F" key and the "G" key with a finger and then flicks the finger toward a "D" key.

(Second exemplary embodiment: Second modified example)

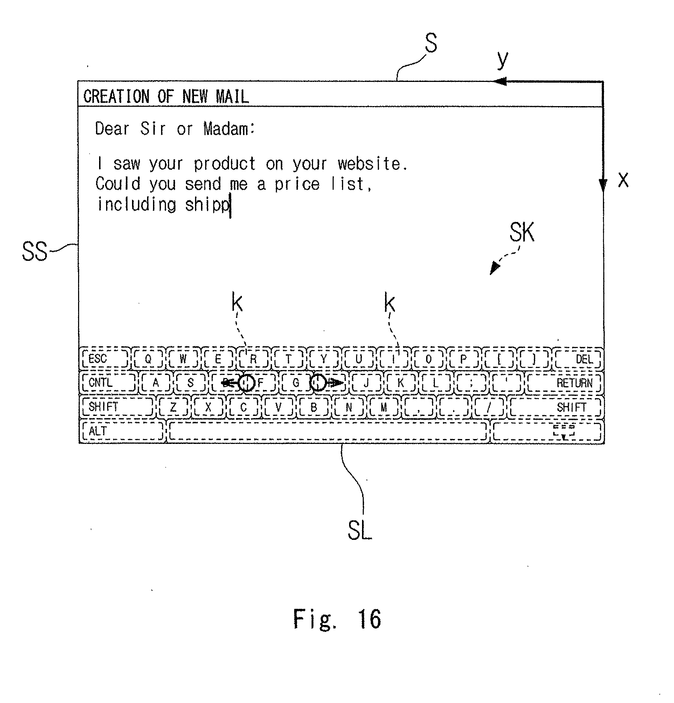

Next, a second modified example of the first exemplary embodiment will be described. In the first exemplary embodiment described above, the keyboard display control unit 30 acquires the boundary location information 32 based on the flick operation performed by the user, as shown in Fig. 9. Alternatively, the keyboard display control unit 30 may acquire the boundary location information 32 based on a pinch-out operation performed by the user, as shown in Fig. 16.

Specifically, in the state where the tablet computer 1 is powered on to start e-mail software and the user is creating a new mail (S101), the input control unit 31 determines whether there is a tap operation on the software keyboard SK, based on the touch signal from the touch sensor control unit 13a (S111). If it is determined that there is a tap operation on the software keyboard SK (S111: YES), the input control unit 31 acquires an operation location for the tap operation from the touch signal, performs a process for inputting a character corresponding to the acquired operation location (S121), and advances the process to S131. The process for inputting a character is a process for inserting a character into the test of a mail. Even when it is determined in S111 that there is no tap operation on the software keyboard SK (S111: NO), the input control unit 31 advances the process to S131.

Next, the keyboard display control unit 30 determines whether the display screen S is vertically positioned (the long sides SL are parallel to the vertical direction), based on the position signal from the acceleration sensor control unit 15a (S131). When the keyboard display control unit 30 determines that the display screen S is vertically positioned (S131: YES), the keyboard display control unit 30 returns the process to S111. On the other hand, when the keyboard display control unit 30 determines that the display screen S is not vertically positioned (S131: NO), the keyboard display control unit 30 considers the display screen S to be laterally positioned (the short sides SS are parallel to the vertical direction), and displays the software keyboard SK in an integrated manner along the long side SL of the display screen S (S141).

Next, the keyboard display control unit 30 refers to the storage unit 18, and determines whether the boundary location information 32 is stored (S151). If it is determined that the boundary location information 32 is stored (S151: YES), the keyboard display control unit 30 advances the process to S181. If it is determined in S151 that the boundary location information 32 is not stored (S151: NO), the keyboard display control unit 30 advances the process to S161.

Next, the keyboard display control unit 30 waits until there is a pinch-out operation on the software keyboard SK, based on the touch signal from the touch sensor control unit 13a (S161: NO). Fig. 16 shows an example of the pinch-out operation on the software keyboard SK. Fig. 16 shows the pinch-out operation in which the user touches the vicinity of the "D" key and the vicinity of the "H" key with two fingers at the same time and then slides the fingers so as to be separated from each other, as indicated by thick lines. In this case, the touch signal from the touch sensor control unit 13a includes y-values respectively corresponding to two initial touch positions, and y-values respectively corresponding to two last touch positions. If it is determined that there is a pinch-out operation (S161: YES), the keyboard display control unit 30 causes the intermediate position (average value) between the y-values respectively corresponding to the two initial touch positions, which are included in the touch signal, to be stored into the storage unit 18 as the boundary location information 32 (S171), and advances the process to S181.

Next, the keyboard display control unit 30 refers to the storage unit 18, divides and displays the software keyboard SK on the display screen S (S181), and advances the process to S200 in Fig. 7.

Specifically, the keyboard display control unit 30 divides and displays the software keyboard SK on the display screen S based on the boundary location information 32 stored in the storage unit 18 (S181). The keyboard display control unit 30 displays, on the left side of the display screen S, the software keys k located at positions greater than the boundary location information 32 indicating the center position of the software keys k, and the keyboard display control unit 30 displays, on the right side of the display screen S, the software keys k located at positions smaller than the boundary location information 32 indicating the center position of the software keys k.

The keyboard display control unit 30 divides and displays the software keyboard SK on the display screen S based on the display size information 33 stored in the storage unit 18 (S181).

In the second modified example described above, the keyboard display control unit 30 acquires the boundary location information 32 based on the pinch-out operation performed by the user, as shown in Fig. 16. Alternatively, the keyboard display control unit 30 may acquire the boundary location information 32 based on a pinch-in operation performed by the user. Also in this case, the keyboard display control unit 30 causes the intermediate position (average value) between the y-values of two initial touch positions, which are included in the touch signal, to be stored into the storage unit 18 as the boundary location information 32.

(Second exemplary embodiment: Third modified example)

In the second exemplary embodiment described above, in S240, the keyboard display control unit 30 determines whether there is a pinch operation in a blank area between the left-side software key group SKL and the right-side software key group SKR, based on the touch signal from the touch sensor control unit 13a. Alternatively, in S240, the keyboard display control unit 30 may determine whether there is a pinch operation in an area including the left-side software key group SKL, the right-side software key group SKR, and the blank area therebetween, based on the touch signal from the touch sensor control unit 13a.

(Second exemplary embodiment: Fourth modified example)

When the position of the display screen S detected by the acceleration sensor 15 is a lateral position (first position), the keyboard display control unit 30 may display the software keyboard SK in an integrated manner on the display screen S, or may divide and display the software keyboard SK on the display screen S. When the display screen S is vertically positioned (second position), the keyboard display control unit 30 may display the software keyboard SK in an integrated manner on the display screen S. According to the above-described configuration, when the tablet computer 1 is held vertically, for example, the width thereof is large enough to touch the display area of the software keyboard SK with both thumbs, which eliminates the need for a division process. Thus, when the user uses the computer while lying down, for example, unnecessary display control is not performed, which improves the usability.

(Third exemplary embodiment)

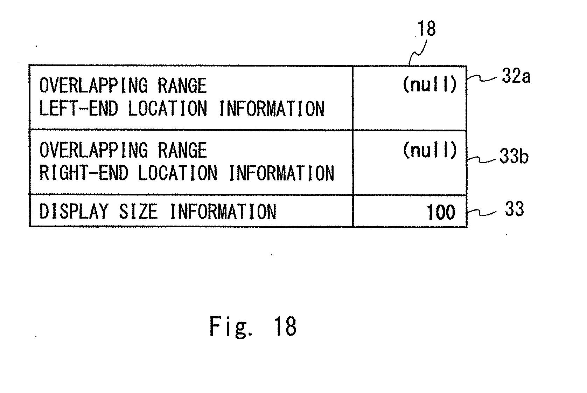

Next, a third exemplary embodiment of the present invention will be described with reference to Figs. 18 to 24. The configuration of the tablet computer 1 according to this exemplary embodiment is the same as that of the second exemplary embodiment shown in Fig. 3. Components corresponding to the components of the second exemplary embodiment described above are denoted by the same reference numerals as a rule. The details of this exemplary embodiment different from those of the second exemplary embodiment will be described below.

As shown in Fig. 5, a storage area for storing the boundary location information 32 and the display size information 33 is secured in the storage unit 18 of the second exemplary embodiment. On the other hand, as shown in Fig. 18, a storage area for storing overlapping range left-end location information 32a, overlapping range right-end location information 32b, and the display size information 33 is ensured in the storage unit 18 of this exemplary embodiment. The overlapping range left-end location information 32a and the overlapping range right-end location information 32b are each information that specifies the software keys k included in both the left-side software key group SKL and the right-side software key group SKR when the software keyboard SK is divided and displayed on the display screen S. The overlapping range left-end location information 32a and the overlapping range right-end location information 32b each indicate a single y-value. The initial value of each of the overlapping range left-end location information 32a and the overlapping range right-end location information 32b is a NULL value. The display size information 33 is information that specifies the size of the display when the software keyboard SK is displayed on the display screen S. The display size information 33 indicates a percentage value as a display ratio of enlargement/reduction from a predetermined size. The initial value of the display size information 33 is "100%". The overlapping range left-end location information 32a, the overlapping range right-end location information 32b, and the display size information 33 constitute display form information that specifies the display form of the division display of the software keyboard SK.

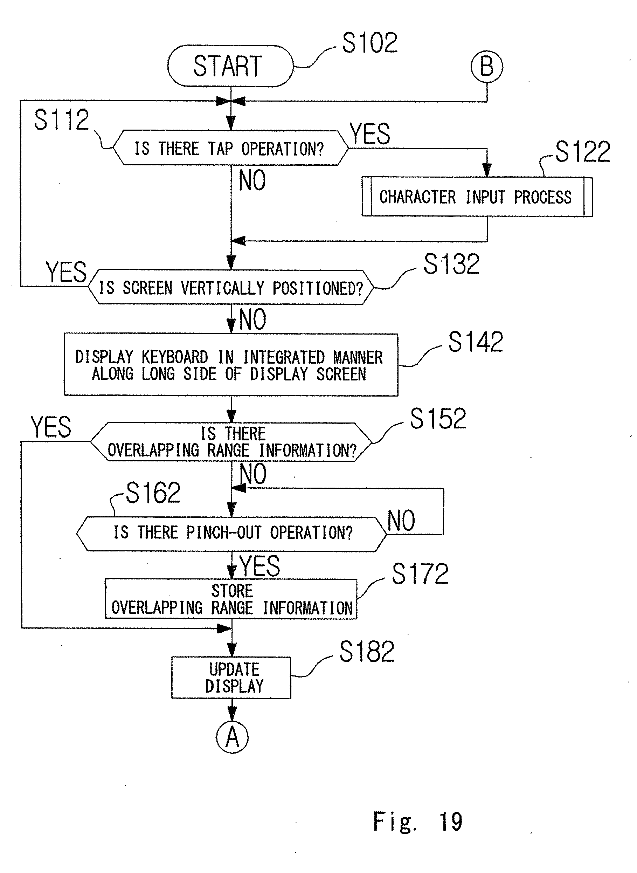

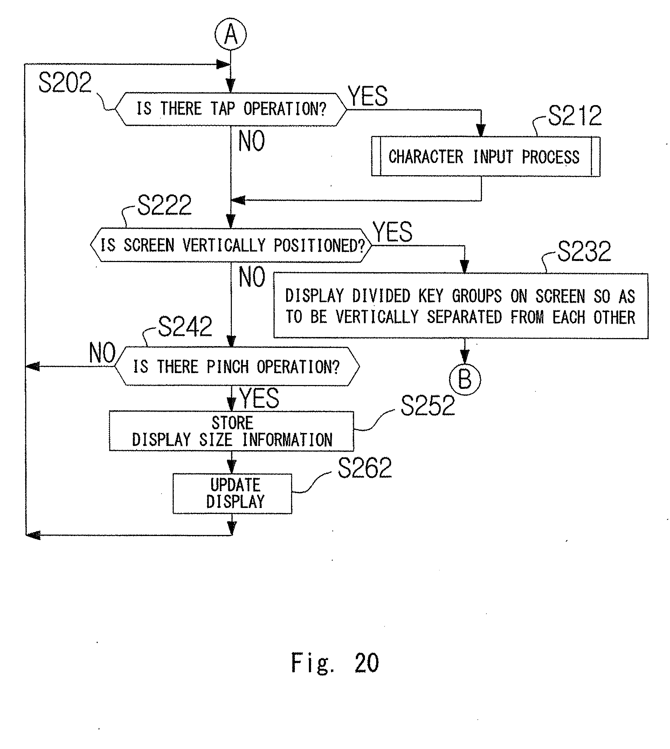

Next, the operation of the tablet computer 1 will be described with reference to control flows shown in Figs. 19 and 20.

First, Fig. 4 shows a state where the tablet computer 1 is powered on to start e-mail software and the user is creating a new mail. Referring to Fig. 4, the display screen S is vertically positioned (the long sides SL are parallel to the vertical direction). The software keyboard SK is displayed in an integrated manner along the short side SS of the display screen S (S102). In this state, the input control unit 31 determines whether there is a tap operation on the software keyboard SK, based on the touch signal from the touch sensor control unit 13a (S112). If it is determined that there is a tap operation on the software keyboard SK (S112: YES), the input control unit 31 acquires an operation location for the tap operation from the touch signal, performs a process for inputting a character corresponding to the acquired operation location (S120), and advances the process to S132. The process for inputting a character is a process for inserting a character into the text of the mail. Even when it is determined in S112 that there is no tap operation on the software keyboard SK (S112: NO), the input control unit 31 advances the process to S132.

Next, the keyboard display control unit 30 determines whether the display screen S is vertically positioned (the long sides SL are parallel to the vertical direction), based on the position signal from the acceleration sensor control unit 15a (S132). When the keyboard display control unit 30 determines that the display screen S is vertically positioned (S132: YES), the keyboard display control unit 30 returns the process to S112. On the other hand, when the keyboard display control unit 30 determines that the display screen S is not vertically positioned (S132: NO), the keyboard display control unit 30 considers the display screen S to be laterally positioned (the short sides SS are parallel to the vertical direction), and displays the software keyboard SK in an integrated manner along the long side SL of the display screen S (S142).

Next, the keyboard display control unit 30 refers to the storage unit 18 and determines whether the overlapping range left-end location information 32a and the overlapping range right-end location information 32b are stored (S152). If it is determined that some kind of overlapping range left-end location information 32a and overlapping range right-end location information 32b are stored (S152: YES), the keyboard display control unit 30 advances the process to S182. If it is determined in S152 that the overlapping range left-end location information 32a and the overlapping range right-end location information 32b are not stored (S152: NO), the keyboard display control unit 30 advances the process to S162.

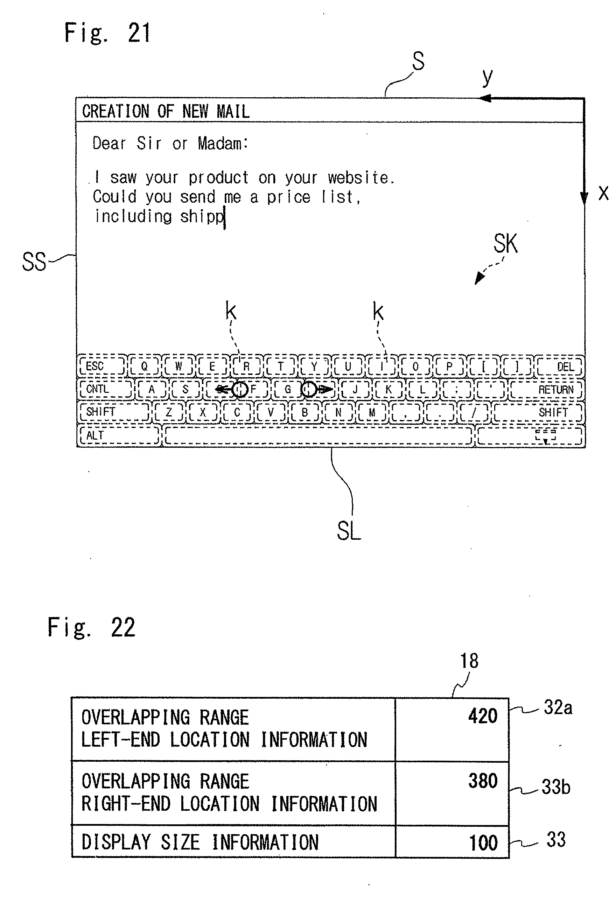

Next, the keyboard display control unit 30 waits until there is a pinch-out operation on the software keyboard SK, based on the touch signal from the touch sensor control unit 13a (S162: NO). Fig. 21 shows an example of the pinch-out operation on the software keyboard SK. Fig. 21 shows the pinch-out operation in which the user touches the vicinity of the "D" key and the vicinity of the "H" key with two fingers at the same time and then slides the two fingers so as to be separated from each other, as indicated by thick lines. In this case, the touch signal from the touch sensor control unit 13a includes y-values respectively corresponding to two initial touch positions, and y-values respectively corresponding to two last touch positions. If it is determined that there is a pinch-out operation (S162: YES), the keyboard display control unit 30 stores, as the overlapping range left-end location information 32a and the overlapping range right-end location information 32b, the y-values respectively corresponding to the two initial touch positions, which are included in the touch signal, into the storage unit 18 as shown in Fig. 22 (S172), and advances the process to S182. In the example shown in Fig. 22, the overlapping range left-end location information 32a is updated with "420" and the overlapping range right-end location information 32b is updated with "380".

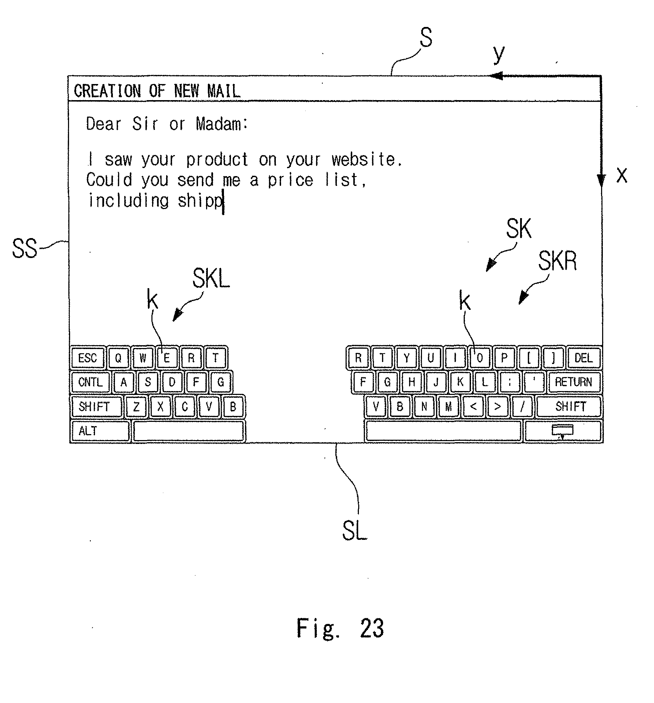

Next, the keyboard display control unit 30 refers to the storage unit 18, divides and displays the software keyboard SK on the display screen S as shown in Fig. 23 (S182), and advances the process to S202 in Fig. 20.

Specifically, the keyboard display control unit 30 divides and displays the software keyboard SK on the display screen S based on the overlapping range left-end location information 32a and overlapping range right-end location information 32b stored into the storage unit 18 (S182). As is obvious from a comparison between Figs. 21 to 23, the keyboard display control unit 30 divides the software keyboard SK on the display screen S in such a manner that the software keys k located at positions equal to or less than the center position "420" of the software keys k, which is indicated by the overlapping range left-end location information 32a, and equal to or greater than the center position "380" of the software keys k, which is indicated by the overlapping range right-end location information 32b, are included in both the left-side software key group SKL and the right-side software key group SKR. In this exemplary embodiment, "R", "T", "F", "G", "V", and "B" keys are included in both the left-side software key group SKL and the right-side software key group SKR.

Further, the keyboard display control unit 30 divides and displays the software keyboard SK on the display screen S based on the display size information 33 stored in the storage unit 18 (S182). Since the initial value of the display size information 33 is "100%" as described above, the keyboard display control unit 30 displays each software key k according to a preset display size.

In the state shown in Fig. 23, the user resumes the creation of a new mail. Specifically, in the state shown in Fig. 23, the input control unit 31 determines whether there is a tap operation on the software keyboard SK, based on the touch signal from the touch sensor control unit 13a (S202). If it is determined that there is a tap operation on the software keyboard SK (S202: YES), the input control unit 31 acquires an operation location for the tap operation from the touch signal, performs a process for inputting a character corresponding to the acquired operation location (S212), and advances the process to S222. Even when it is determined in S202 that there is no tap operation on the software keyboard SK (S202: NO), the input control unit 31 advances the process to S222.

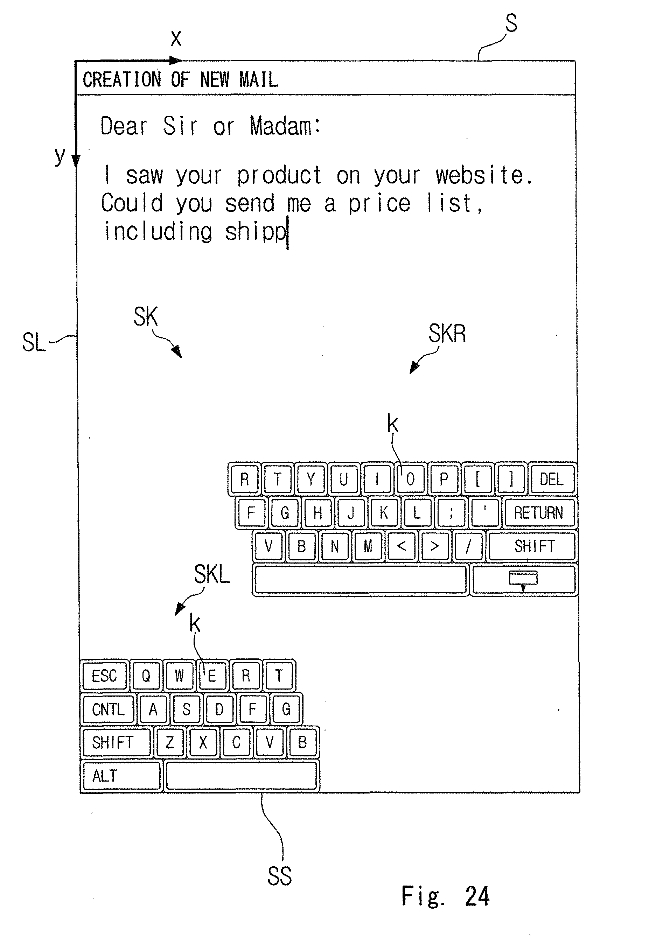

Next, the keyboard display control unit 30 determines whether the display screen S is vertically positioned (the long sides SL are parallel to the vertical direction) based on the position signal from the acceleration sensor control unit 15a (S222). When the keyboard display control unit 30 determines that the display screen S is vertically positioned (S222: YES), the keyboard display control unit 30 displays the left-side software key group SKL and the right-side software key group SKR in such a manner that they are vertically separated from each other as shown in Fig. 24 (S232), and returns the process to Fig. 19. On the other hand, when it is determined that the display screen S is not vertically positioned (S222: NO), the process advances to S242.

Next, the keyboard display control unit 30 determines whether there is a pinch operation in a blank area between the left-side software key group SKL and the right-side software key group SKR based on the touch signal from the touch sensor control unit 13a (S242). If it is determined that there is a pinch operation (S242: YES), the keyboard display control unit 30 stores, into the storage unit 18, a new display size, which is obtained based on the touch signal, as the display size information 33 (S252), and advances the process to S262.

In this case, the touch signal from the touch sensor control unit 13a includes y-values respectively corresponding to two initial touch positions, and y-values respectively corresponding to two last touch positions. Accordingly, the keyboard display control unit 30 obtains a new display size based on, for example, the following expression.

$$(\text{new display size}) = (\text{current display size}) \times (\text{difference between y-values respectively corresponding to two last touch positions})/(\text{y-values respectively corresponding to two initial touch positions})$$

According to the above expression, in the pinch operation, a pinch-in operation means a reduced display and a pinch-out operation means an enlarged display.

Next, the keyboard display control unit 30 refers to the storage unit 18, divides and displays the software keyboard SK on the display screen S (S262), and advances the process to S202.

Specifically, the keyboard display control unit 30 divides and displays the software keyboard SK on the display screen S based on the display size information 33 stored into the storage unit 18. In this case, each software key k may be displayed in a reduced size with the aspect ratio maintained, or may be displayed by reducing only the width of each software key k in the longitudinal direction of the long side SL.

When it is determined that there is no pinch operation in S242 (S242: NO), the keyboard display control unit 30 returns the process to S202.

In sum, the third exemplary embodiment of the present invention described above has the following features.

(1) That is, the tablet computer 1 includes: the display 12 including the display screen S; the touch sensor 13 that detects a user operation on the display screen S; and the keyboard display control unit that causes the software keyboard SK including the plurality of software keys k to be displayed on the display screen S. The keyboard display control unit 30 divides the software keyboard SK, displays the divided software keyboard SK on the display screen S, and controls the display form of the division display of the software keyboard SK based on the operation detected by the touch sensor 13 (S152 to S182, S242 to S262). The above-described configuration allows the user to freely adjust the display form of the division display of the software keyboard SK so that the user can easily input data by using the software keyboard SK.

(2) The keyboard display control unit 30 determines the division boundary location of the software keyboard SK based on the operation detected by the touch sensor 13 (S152 to S182). The above-described configuration allows the user to determine the division location of the software keyboard SK. The software keys k to be operated with the right hand or the left hand vary widely between users. Accordingly, the software keyboard SK is divided and displayed at a boundary location suitable for each user, thereby improving the efficiency of inputting data using the software keyboard SK.

(3) Further, the keyboard display control unit 30 displays the software keyboard SK on the display screen S in such a manner that at least one of the plurality of software keys k is included in both the left-side software key group SKL and the right-side software key group SKR (a plurality of software key groups) obtained after the division, and determines at least one software key k to be included in both the left-side software key group SKL and the right-side software key group SKR, based on the operation detected by the touch sensor 13 (S152 to S182). The above-described configuration allows the user to determine the software key k to be included in both the left-side software key group SKL and the right-side software key group SKR. This makes it possible to achieve the division display of the software keyboard SK which can be used by users, who operate the "T" key with both the right hand and the left hand depending on the situation, with no stress.

(8) The tablet computer 1 further includes the acceleration sensor 15 that detects the position of the display screen S. The keyboard display control unit 30 chooses to vertically arrange or to laterally arrange the left-side software key group SKL and the right-side software key group SKR obtained after the division on the display screen S, depending on the position of the display screen S detected by the acceleration sensor 15. In the above-described configuration, the left-side software key group SKL and the right-side software key group SKR obtained after the division are suitably arranged depending on the position of the display screen S. In the third exemplary embodiment described above, when the display screen S is vertically positioned, the left-side software key group SKL and the right-side software key group SKR are divided and displayed on the display screen S in such a manner that they are vertically separated from each other (S232), and when the display screen S is laterally positioned, the left-side software key group SKL and the right-side software key group SKR are divided and displayed on the display screen S in such a manner that they are laterally arranged side by side (S182).

(Third exemplary embodiment: First modified example)

In the third exemplary embodiment described above, the keyboard display control unit 30 divides and displays the software keyboard SK on the display screen S in such a manner that the software keys k located at positions equal to or less than the center position "420" of the software keys k, which is indicated by the overlapping range left-end location information 32a, and equal to or greater than the center position "380" of the software keys k, which is indicated by the overlapping range right-end location information 32b, are included in both the left-side software key group SKL and the right-side software key group SKR (S182). Alternatively, the following division displays can also be adopted. That is, first, the keyboard display control unit 30 obtains an average value "400" between "420" indicated by the overlapping range left-end location information 32a and "380" indicated by the overlapping range right-end location information 32b. After the software keyboard SK is divided at the boundary corresponding to the average value "400", the software keys k located at positions equal to or less than the center position "420" of the software keys 4, which is indicated by the overlapping range left-end location information 32a, and equal to or greater than the average value "400" are included in the right-side software key group SKR. Similarly, after the software keyboard SK is divided at the boundary corresponding to the average value "400", the software keys k located at positions equal to or greater than the center position "380" of the software keys 4, which is indicated by the overlapping range right-end location information 32b, and equal to or less than the average value "400" are included in the left-side software key group SKL. Also in this case, as in the third exemplary embodiment described above, the keyboard display control unit 30 divides and displays the software keyboard SK on the display screen S as shown in Fig. 23 (S182).

(Third exemplary embodiment: Second modified example)

Next, a second modified example of the third exemplary embodiment will be described. In the third exemplary embodiment described above, as shown in S162 to S172 of Fig. 19, the keyboard display control unit 30 acquires the overlapping range left-end location information 32a and the overlapping range right-end location information 32b based on the pinch-output operation performed by the user. Alternatively, the keyboard display control unit 30 may acquire the overlapping range left-end location information 32a and the overlapping range right-end location information 32b based on a pinch-in operation performed by the user.

(Third exemplary embodiment: third modified example)

In the third exemplary embodiment described above, in S242, the keyboard display control unit 30 determines whether there is a pinch operation in a blank area between the left-side software key group SKL and the right-side software key group SKR based on the touch signal from the touch sensor control unit 13a. Alternatively, in S242, the keyboard display control unit 30 may determine whether there is a pinch operation in an area including the left-side software key group SKL, the right-side software key group SKR, and the blank area therebetween, based on the touch signal from the touch sensor control unit 13a.

The first to third exemplary embodiments of the present invention and the modified examples thereof have been described above. The first to third exemplary embodiments and modified examples thereof can be combined as desirable unless there is a logical contradiction. For example, the process of S230 shown in Fig. 7 and the process of S232 shown in Fig. 20 can replace each other.

Further, in the first to third exemplary embodiments described above, the touch screen display 11 having a configuration in which the display 12 and the touch sensor 13 are arranged so as to overlap each other is provided. However, a combination of the display 12 and a touch sensor that is arranged so as not to overlap the display 12 may be adopted instead of the touch screen display 11.

Furthermore, in the first to third exemplary embodiments described above, the touching operations performed by the user on the display screen S of the display 12 are illustrated as examples of the user operation on the display screen S of the display 12 detected by the touch sensor 13. Alternatively, the user operation on the display screen S of the display 12, which is detected by the touch sensor 13, may be an approaching operation performed by the user on the display screen S of the display 12. The only difference between the touching operation and the approaching operation resides in how the tablet computer 1 sets a threshold for a change in the capacitance detected by the touch sensor 13.

Some examples of the input interface realized in a software manner on the display screen S of the display 12 will be given below.

(First input interface example)

A first input interface example will be described below. Components corresponding to the components of the second exemplary embodiment described above are denoted by the same reference numerals as a rule.

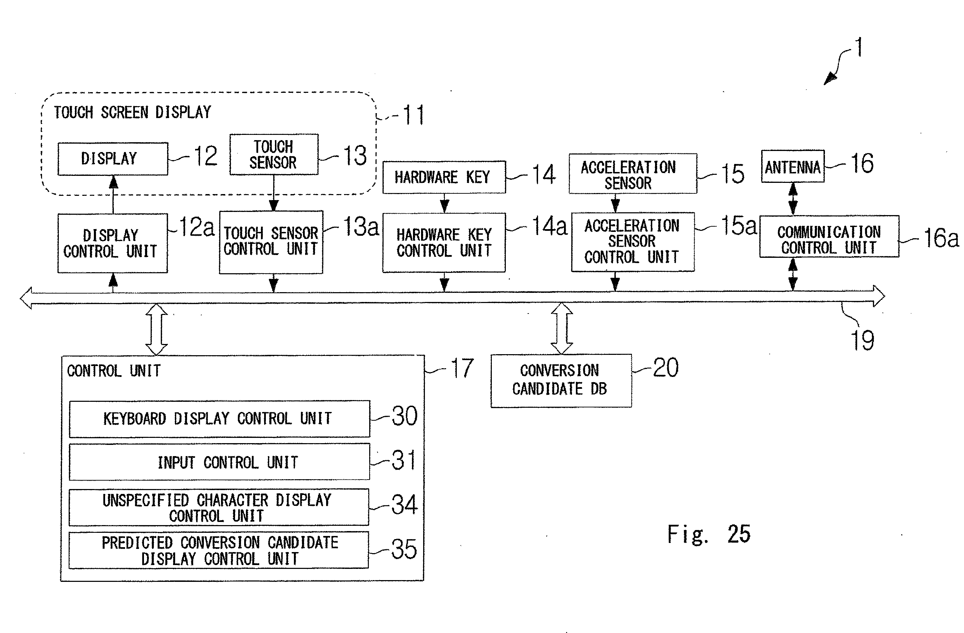

As shown in Fig. 25, the tablet computer 1 includes the display 12 (display means), the display control unit 12a, the touch sensor 13 (operation detection means), the touch sensor control unit 13a, the hardware keys 14, the hardware key control unit 14a, the acceleration sensor 15 (position detection means), the acceleration sensor control unit 15a, the antenna 16, the communication control unit 16a, the control unit 17, the bus 19, and a conversion candidate DB 20.

The display 12 is connected to the bus 19 via the display control unit 12a. The touch sensor 13 is connected to the bus 19 via the touch sensor control unit 13a. Each hardware key 14 is connected to the bus 19 via the hardware key control unit 14a. The acceleration sensor 15 is connected to the bus 19 via the acceleration sensor control unit 15a. The antenna 16 is connected to the bus 19 via the communication control unit 16a. The control unit 17 is connected to the bus 19. The conversion candidate DB 20 is connected to the bus 19.

The touch screen display 11 includes the display 12 and the touch sensor 13.

The display 12 includes the display screen S capable of displaying characters, images, and the like. In this exemplary embodiment, the display screen S of the display 12 is formed in a rectangular shape with an aspect ratio of about 1.4, and has long sides SL and short sides SS. Examples of the display 12 include an LCD (Liquid Crystal Display), an organic EL (ElectroLuminescence) display, and an inorganic EL display.

The display control unit 12a causes characters, images, and the like to be displayed on the display screen S of the display 12 based on the image signal from the control unit 17.

The touch sensor 13 detects a user operation on the display screen S of the display 12. In this exemplary embodiment, a projected capacitive touch sensor capable of detecting multiple touches is used as the touch sensor 13. However, with the recent development in technology, surface capacitive and resistive touch sensors capable of detecting multiple touches have also been realized. Accordingly, a surface capacitive or resistive touch sensor may be used as the touch sensor 13, instead of the projected capacitive touch sensor.

Examples of the user operation on the display screen S of the display 12, which is detected by the touch sensor 13, include touching operations performed by the user on the display screen S of the display 12. The touching operations performed by the user are mainly classified as follows.

Tap (single tap): A touching operation in which the user taps the display screen S of the display 12 with a finger. This operation is equivalent to a click with a mouse.

Double-tap: A touching operation in which the user taps the screen twice during a short period of time. This operation is equivalent to a double-click with a mouse.

Drag: A touching operation in which the user moves his/her finger in the state where the finger is in contact with the display screen S of the display 12.

Flick: A touching operation in which the user flicks the display screen S with a finger in the state where the finger is in contact with the display screen S of the display 12.

Pinch: A touching operation in which the user operates the display screen S of the display 12 with two fingers at the same time.

Pinch-out: A touching operation in which the user spreads two fingers apart in the state where the two fingers are in contact with the display screen S of the display 12.

Pinch-in: A touching operation in which the user brings two fingers close to each other in the state where the two fingers are in contact with the display screen S of the display 12.

Examples of "sliding operation" include the above-mentioned "drag", "flick", and "pinch" operations.

The touch sensor control unit 13a generates a touch signal based on the content of the user operation on the display screen S of the display 12, which is detected by the touch sensor 13, and outputs the generated touch signal to the control unit 17.

As shown in Fig. 2, the housing 10 of the tablet computer 1 is provided with, for example, three hardware keys 14. When any one of the hardware keys 14 is pressed, the hardware key control unit 14a generates a press-down signal corresponding to the pressed hardware key 14, and outputs the generated press-down signal to the control unit 17.

The acceleration sensor 15 detects the position of the display screen S of the display 12. The acceleration sensor 15 is composed of, for example, a three-axis acceleration sensor. The acceleration sensor control unit 15a generates a position signal based on the position of the display screen S of the display 12, which is detected by the acceleration sensor 15, and outputs the generated position signal to the control unit 17.

The communication control unit 16a generates a signal by encoding data output from the control unit 17, and outputs the generated signal from the antenna 16. Further, the communication control unit 16a generates data by decoding the signal received from the antenna 16, and outputs the generated data to the control unit 17.

The control unit 17 is composed of a computer including a CPU (Central Processing Unit), a ROM (Read Only Memory), and a RAM (Random Access Memory). The ROM stores a program. The program is loaded into the CPU and executed on the CPU, thereby allowing hardware, such as the CPU, to function as the keyboard display control unit 30 (software keyboard display control means), the input control unit 31 (input control means), an unspecified character display control unit 34 (unspecified character display control means), and a predicted conversion candidate display control unit 35 (predicted conversion candidate display control means).

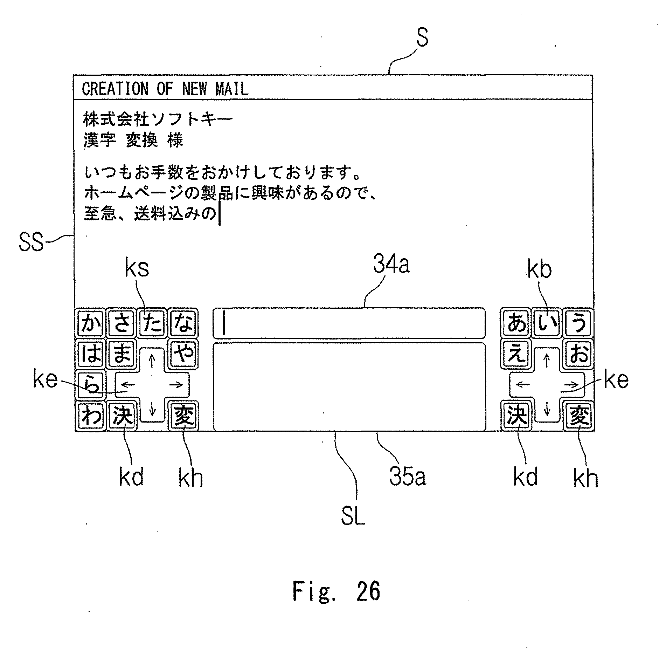

As shown in Fig. 26, the keyboard display control unit 30 displays, on the display screen S, a plurality of software consonant keys ks corresponding to consonants, a plurality of software vowel keys kb corresponding to vowels, two software selection keys ke, two software determination keys kd, and two software conversion keys kh. Specifically, as shown in Fig. 26, assuming that the display screen S is laterally positioned (the short sides SS are parallel to the vertical direction), the keyboard display control unit 30 displays, on the left side on the display screen S, the software consonant keys ks, one software selection key ke, one software determination key kd, and one software conversion key kh. The keyboard display control unit 30 displays, on the right side on the display screen S, the software vowel keys kb, one software selection key ke, one software determination key kd, and one software conversion key kh.

The input control unit 31 performs various processes based on the touch signal output from the touch sensor control unit 13a.

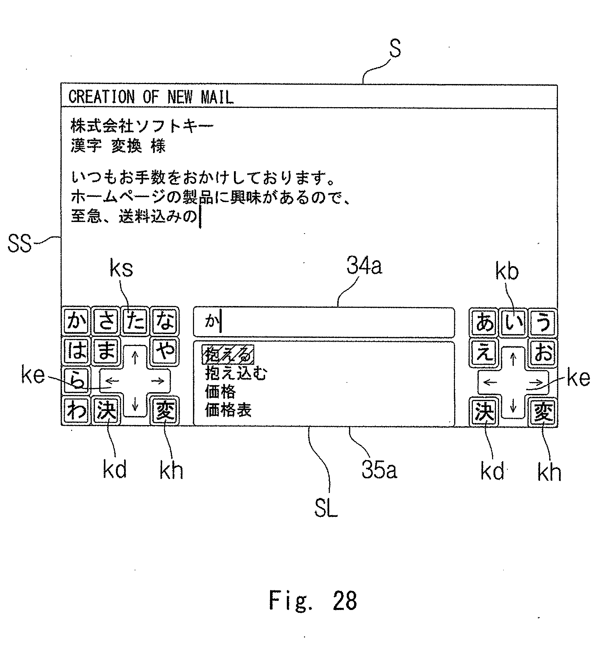

As shown in Fig. 28, the unspecified character display control unit 34 displays, in an unspecified character display area 34a on the display screen S, a Hiragana character which is input by the software consonant keys ks and the software vowel keys kb. The unspecified character display area 34a is disposed between the plurality of software consonant keys ks and the plurality of software vowel keys kb.

The predicted conversion candidate display control unit 35 refers to the conversion candidate DB 20 to acquire, from the conversion candidate DB 20, a plurality of conversion candidates corresponding to the Hiragana character which is an unspecified character displayed on the display screen S by the unspecified character display control unit 34. As shown in Fig. 28, the predicted conversion candidate display control unit 35 displays the acquired conversion candidates in the predicted conversion candidate display area 35a on the display screen S. As with the unspecified character display area 34a, the predicted conversion candidate display area 35a is disposed between the plurality of software consonant keys ks and the plurality of software vowel keys kb.

The conversion candidate DB 20 is a database that stores conversion candidate information for Hiragana. The conversion candidate information for Hiragana is information on a correspondence relation between Hiragana characters and Chinese characters, the pronunciation of which is indicated by the Hiragana characters.

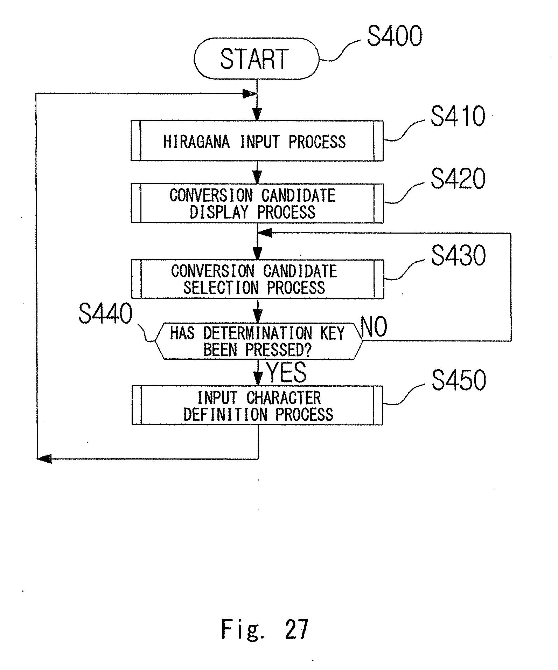

Next, the operation of the tablet computer 1 will be described with reference to the control flow shown in Fig. 27.

First, Fig. 26 shows a state where the tablet computer 1 is powered on to start e-mail software and the user is creating a new mail (S400). Referring to Fig. 26, the display screen S is laterally positioned (the short sides SS are parallel to the vertical direction). In this state, the input control unit 31 executes a Hiragana input process based on the touch signal from the touch sensor control unit 13a (S410). Specifically, when it is determined that the software consonant key ks and the software vowel key kb are tapped simultaneously or alternately, the input control unit 31 selects a Hiragana character corresponding to a combination of the tapped software consonant key ks and software vowel key kb as shown in Fig. 28, and the unspecified character display control unit 34 displays the Hiragana character selected by the input control unit 31 in the unspecified character display area 34a on the display screen S.

When the Hiragana character is displayed in the unspecified character display area 34a on the display screen S by the unspecified character display control unit 34, the predicted conversion candidate display control unit 35 refers to the conversion candidate DB 20 to acquire a plurality of conversion candidates corresponding to the Hiragana character, and displays the plurality of acquired conversion candidates in the predicted conversion candidate display area 35a as shown in Fig. 28 (S420). In this case, the predicted conversion candidate display control unit 35 causes the conversion candidate displayed on the top of the plurality of conversion candidates to be highlighted to indicate the selected state.

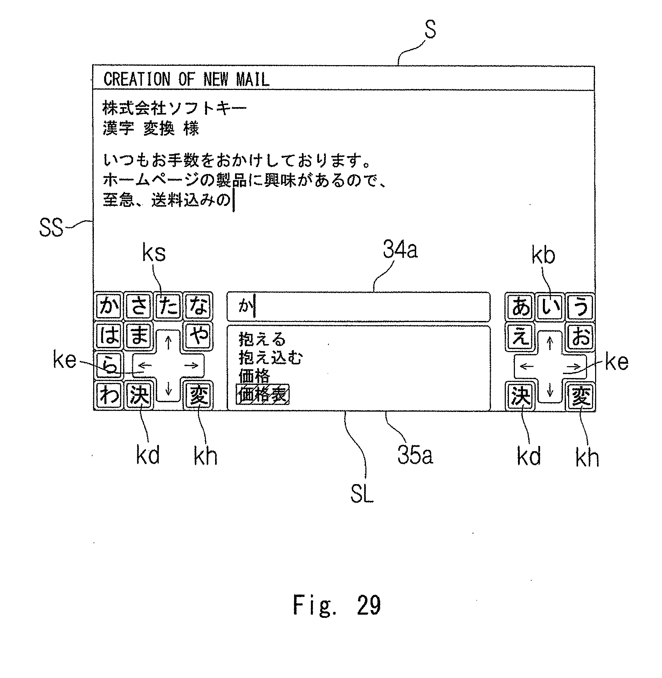

Next, when the user taps the software selection key ke, or taps the software conversion key kh, the predicted conversion candidate display control unit 35 causes a conversion candidate, which is different from the currently highlighted conversion candidate, to be highlighted as shown in Fig. 29 (S430). Specifically, when an up-arrow portion of the software selection key ke is tapped, the predicted conversion candidate display control unit 35 causes the conversion candidate immediately above the currently highlighted conversion candidate to be highlighted. When the software conversion key kh is tapped, the predicted conversion candidate display control unit 35 causes the conversion candidate immediately below the currently highlighted conversion candidate to be highlighted.

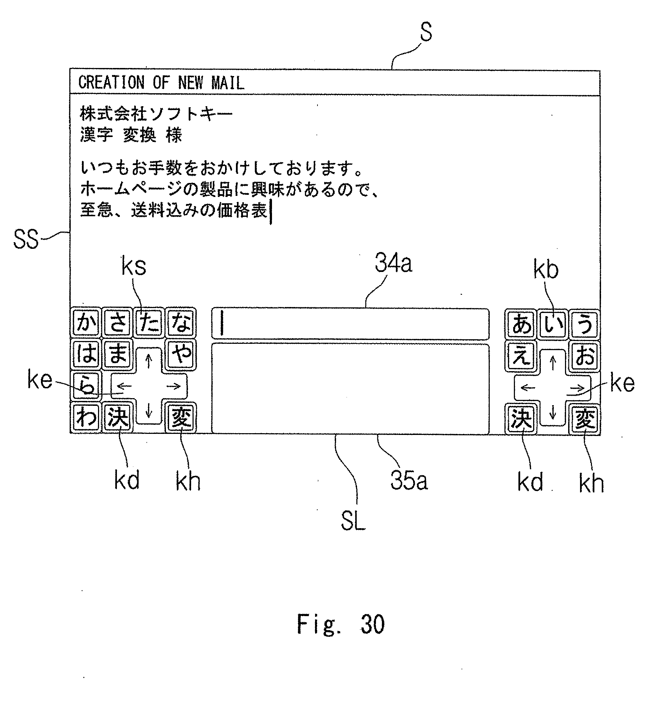

The process for selecting a conversion candidate as described above (S430) is continued until the user taps the software determination key kd (S440: NO). When the user taps the software determination key kd (S440: YES), as shown in Fig. 30, the input control unit 31 inserts, as an input specified character, the currently highlighted conversion candidate at the current input position in the text of the mail (S450), clears the display of the unspecified character display area 34a and the predicted conversion candidate display area 35a, and returns the process to S410.

According to the above-described configuration, the software consonant keys ks and the software vowel keys kb are laterally arranged, thereby making it possible to effectively input characters.

In the state shown in Fig. 28, it is difficult for the user to directly tap a conversion candidate. This is because the predicted conversion candidate display area 35a is displayed at the center in the direction of the long side SL of the display screen S. However, the software selection keys ke and the software conversion keys kh are arranged laterally in the direction of the long side SL of the display screen S. This allows the user to easily select a conversion candidate by utilizing these keys.

The user may select a conversion candidate by directly tapping the conversion candidate, as a matter of course.

Although, as shown in Fig. 28, the software selection keys ke, the software determination keys kd, and the software conversion keys kh are displayed on both sides in the direction of the long side SL of the display screen S, these keys may be displayed on only one side.

(Second input interface example)

A second input interface example will be described below. Components corresponding to the components of the second exemplary embodiment described above are denoted by the same reference numerals as a rule.

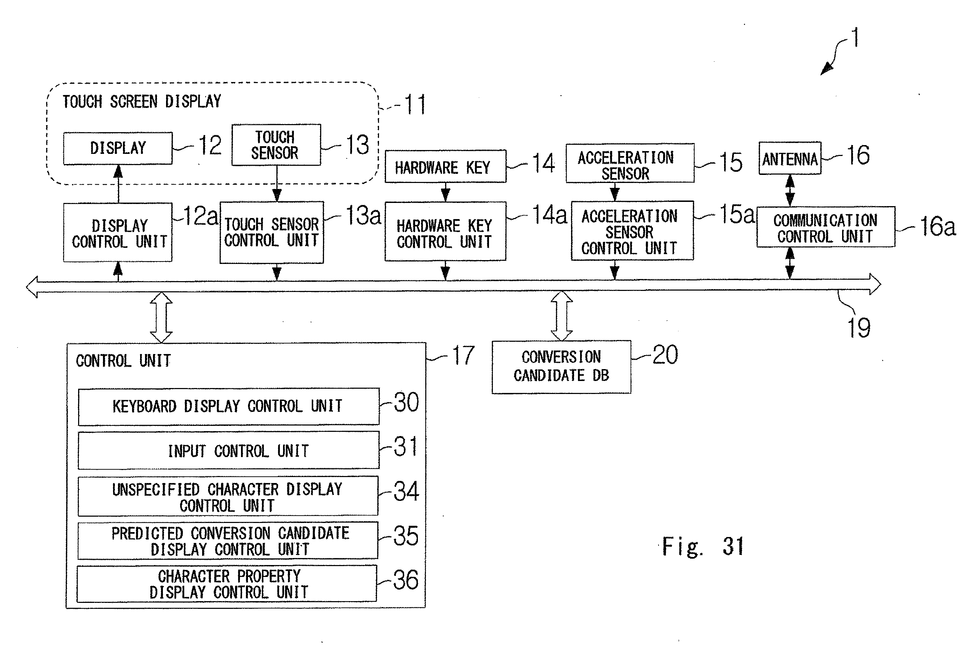

As shown in Fig. 31, the tablet computer 1 includes the display 12 (display means), the display control unit 12a, the touch sensor 13 (operation detection means), the touch sensor control unit 13a, the hardware keys 14, the hardware key control unit 14a, the acceleration sensor 15 (position detection means), the acceleration sensor control unit 15a, the antenna 16, the communication control unit 16a, the control unit 17, the bus 19, and the conversion candidate DB 20.

The display 12 is connected to the bus 19 via the display control unit 12a. The touch sensor 13 is connected to the bus 19 via the touch sensor control unit 13a. Each hardware key 14 is connected to the bus 19 via the hardware key control unit 14a. The acceleration sensor 15 is connected to the bus 19 via the acceleration sensor control unit 15a. The antenna 16 is connected to the bus 19 via the communication control unit 16a. The control unit 17 is connected to the bus 19. The conversion candidate DB 20 is connected to the bus 19.

The touch screen display 11 includes the display 12 and the touch sensor 13.

The display 12 includes the display screen S capable of displaying characters, images, and the like. In this exemplary embodiment, the display screen S of the display 12 is formed in a rectangular shape with an aspect ratio of about 1.4, and has long sides SL and short sides SS. The display 12 is, for example, an LCD (Liquid Crystal Display), an organic EL (ElectroLuminescence) display, or an inorganic EL display.

The display control unit 12a causes characters, images, and the like to be displayed on the display screen S of the display 12 based on the image signal from the control unit 17.

The touch sensor 13 detects a user operation on the display screen S of the display 12. In this exemplary embodiment, a projected capacitive touch sensor capable of detecting multiple touches is used as the touch sensor 13. However, with the recent development in technology, surface capacitive and resistive touch sensors capable of detecting multiple touches have also been realized. Accordingly, a front capacitive or resistive touch sensor may be used as the touch sensor 13, instead of the projected capacitive touch sensor.

Examples of the user operation on the display screen S of the display 12, which is detected by the touch sensor 13, include touching operations performed by the user on the display screen S of the display 12. The touching operations performed by the user are mainly classified as follows.

Tap (single tap): A touching operation in which the user taps the display screen S of the display 12 with a finger. This operation is equivalent to a click with a mouse.

Double-tap: A touching operation in which the user taps the screen twice during a short period of time. This operation is equivalent to a double-click with a mouse.

Drag: A touching operation in which the user moves his/her finger in the state where the finger is in contact with the display screen S of the display 12.

Flick: A touching operation in which the user flicks the display screen S with a finger in the state where the finger is in contact with the display screen S of the display 12.

Pinch: A touching operation in which the user operates the display screen S of the display 12 with two fingers at the same time.

Pinch-out: A touching operation in which the user spreads two fingers apart in the state where the two fingers are in contact with the display screen S of the display 12.

Pinch-in: A touching operation in which the user brings two fingers close to each other in the state where the two fingers are in contact with the display screen S of the display 12.

Examples of "sliding operation" include the above-mentioned "drag", "flick", and "pinch" operations.

The touch sensor control unit 13a generates a touch signal based on the content of the user operation on the display screen S of the display 12, which is detected by the touch sensor 13, and outputs the generated touch signal to the control unit 17.

As shown in Fig. 2, the housing 10 of the tablet computer 1 is provided with, for example, three hardware keys 14. When any one of the hardware keys 14 is pressed, the hardware key control unit 14a generates a press-down signal corresponding to the pressed hardware key 14, and outputs the generated press-down signal to the control unit 17.

The acceleration sensor 15 detects the position of the display screen S of the display 12. The acceleration sensor 15 is composed of, for example, a three-axis acceleration sensor. The acceleration sensor control unit 15a generates a position signal based on the position of the display screen S of the display 12, which is detected by the acceleration sensor 15, and outputs the generated position signal to the control unit 17.

The communication control unit 16a generates a signal by encoding data output from the control unit 17, and outputs the generated signal from the antenna 16. Further, the communication control unit 16a generates data by decoding the signal received from the antenna 16, and outputs the generated data to the control unit 17.

The control unit 17 is composed of a computer including a CPU (Central Processing Unit), a ROM (Read Only Memory), and a RAM (Random Access Memory). The ROM stores a program. The program is loaded into the CPU and executed on the CPU, thereby allowing hardware, such as the CPU, to function as the keyboard display control unit 30 (software keyboard display control means), the input control unit 31 (input control means), the unspecified character display control unit 34 (unspecified character display control means), the predicted conversion candidate display control unit 35 (predicted conversion candidate display control means), and a character property display control unit 36 (character attribute display control means).

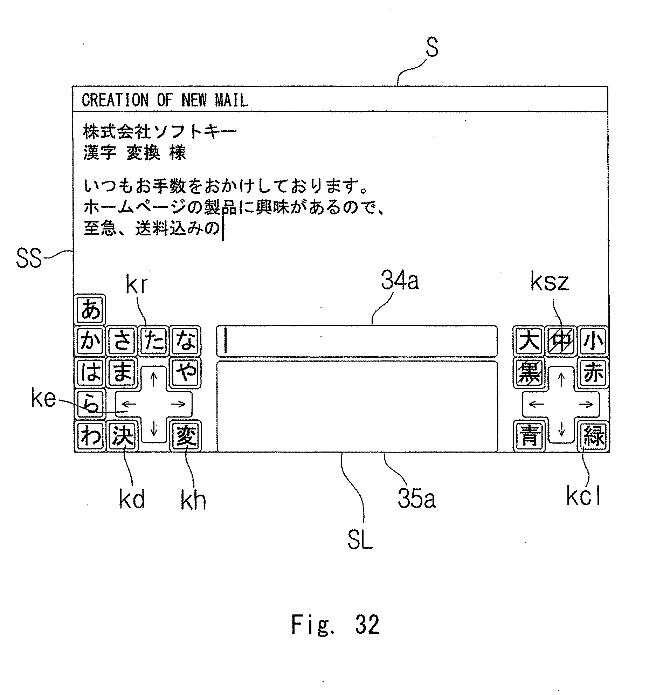

As shown in Fig. 32, the keyboard display control unit 30 displays, on the display screen S, a plurality of software initial keys kr corresponding to initial characters in each column of a syllabary, two software selection keys ke, one software determination key kd, one software conversion key kh, a plurality of software character size keys ksz, and a plurality of software character color keys kcl. Specifically, as shown in Fig. 32, assuming that the display screen S is laterally positioned (the short sides SS are parallel to the vertical direction), the keyboard display control unit 30 displays, on the left side on the display screen S, the software initial keys kr, one software selection key ke, one software determination key kd, and one software conversion key kh. The keyboard display control unit 30 displays, on the right side on the display screen S, one software selection key ke, a plurality of software character size keys ksz, and a plurality of software character color keys kcl.

The software character size keys ksz are software keys for specifying the size of each character. In the example shown in Fig. 32, the software character size keys ksz corresponding to "large", "medium", and "small", respectively, are displayed.

The software character color keys kcl are software keys for specifying the color of each character. In the example shown in Fig. 32, four software character color keys kcl corresponding to "black", "red", "blue", and "green", respectively, are displayed.

The input control unit 31 performs various processes based on the touch signal output from the touch sensor control unit 13a.

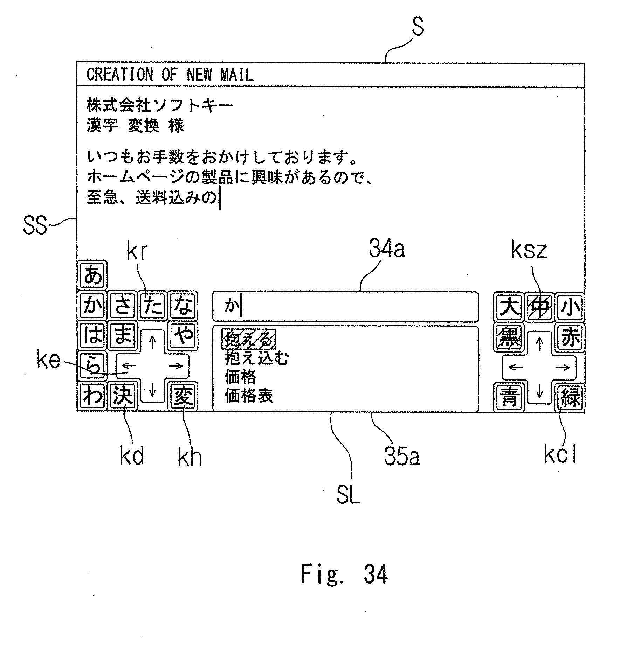

As shown in Fig. 34, the unspecified character display control unit 34 displays the Hiragana character, which is input by the software initial keys kr, in the unspecified character display area 34a on the display screen S. The unspecified character display area 34a is disposed between the plurality of software initial keys kr and the plurality of software character size keys ksz.

The predicted conversion candidate display control unit 35 refers to the conversion candidate DB 20 to acquire, from the conversion candidate DB 20, a plurality of conversion candidates corresponding to the Hiragana character which is an unspecified character displayed on the display screen S by the unspecified character display control unit 34. Further, as shown in Fig. 34, the predicted conversion candidate display control unit 35 displays the acquired conversion candidates in the predicted conversion candidate display area 35a on the display screen S. The predicted conversion candidate display area 35a is disposed between the plurality of software initial keys kr and the plurality of software color keys kcl.

The conversion candidate DB 20 is a database that stores conversion candidate information for Hiragana. The conversion candidate information for Hiragana is information on a correspondence relation between Hiragana characters and Chinese characters, the pronunciation of which is indicated by the Hiragana characters.

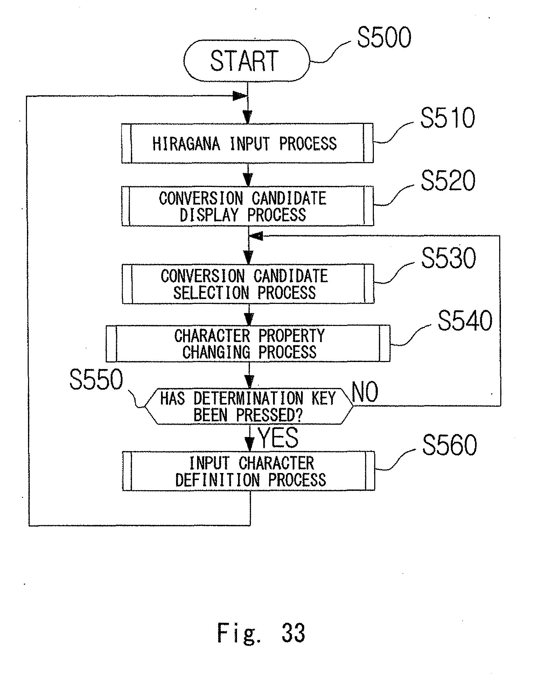

Next, the operation of the tablet computer 1 will be described with reference to the control flow shown in Fig. 33.

First, Fig. 32 shows a state where the tablet computer 1 is powered on to start e-mail software and the user is creating a new mail (S500). Referring to Fig. 32, the display screen S is laterally positioned (the short sides SS are parallel to the vertical direction). In this state, the character property display control unit 36 causes the software character size key ksz indicating "medium" among the three software character size keys ksz to be highlighted. Further, the character property display control unit 36 causes the software character color key kcl indicating "black" among the four software character color keys kcl to be highlighted. In this state, the input control unit 31 executes the Hiragana input process based on the touch signal from the touch sensor control unit 13a (S510). Specifically, as shown in Fig. 34, the input control unit 31 selects a Hiragana character according to the number of tap operations on each software initial key kr, and the unspecified character display control unit 34 displays the Hiragana character selected by the input control unit 31 in the unspecified character display area 34a on the display screen S.

When the Hiragana character is displayed in the unspecified character display area 34a on the display screen S by the unspecified character display control unit 34, the predicted conversion candidate display control unit 35 refers to the conversion candidate DB 20 to acquire a plurality of conversion candidates corresponding to the Hiragana character, and displays the plurality of acquired conversion candidates in the predicted conversion candidate display area 35a as shown in Fig. 34 (S520). In this case, the predicted conversion candidate display control unit 35 causes the conversion candidate displayed on the top of the plurality of conversion candidates to be highlighted to indicate the selected state.

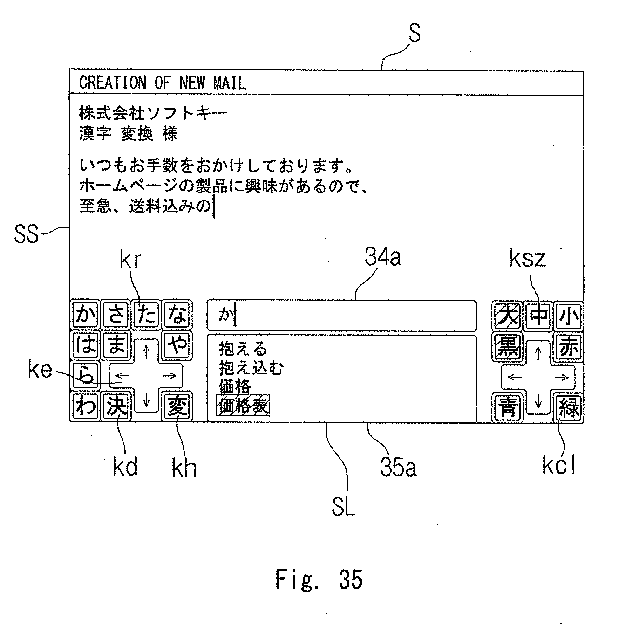

Next, when the user taps the software selection key ke, or taps the software conversion key kh, the predicted conversion candidate display control unit 35 causes a conversion candidate, which is different from the currently highlighted conversion candidate, to be highlighted as shown in Fig. 35 (S530). Specifically, when an up-arrow portion of the software selection key ke is tapped, the predicted conversion candidate display control unit 35 causes the conversion candidate immediately above the currently highlighted conversion candidate to be highlighted. When the software conversion key kh is tapped, the predicted conversion candidate display control unit 35 causes the conversion candidate immediately below the currently highlighted conversion candidate to be highlighted.

Next, when the user taps the software character size key ksz or the software character color key kcl, the character property display control unit 36 causes the tapped software character size key ksz or software character color key kcl to be highlighted as shown in Fig. 35 (S540).

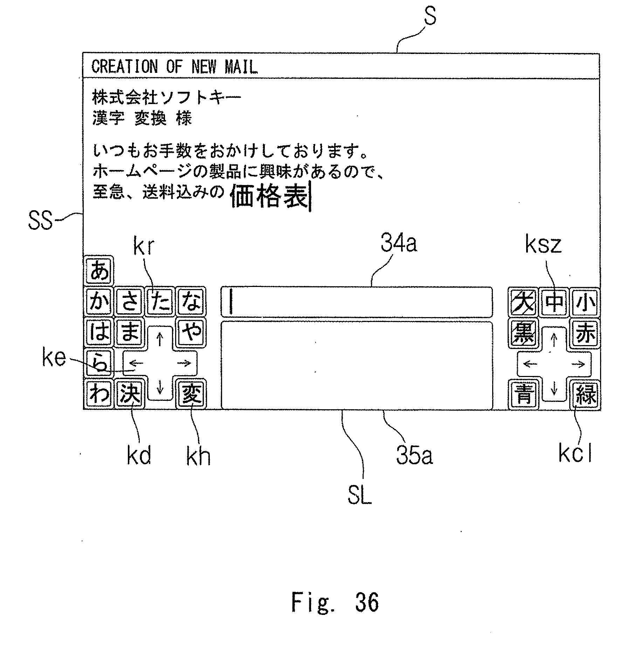

The process for selecting a conversion candidate (S530) and the process for changing character properties (S540) as described above are continued until the user taps the software determination key kd (S550: NO). When the user taps the software determination key kd (S550: YES), as shown in Fig. 36, the input control unit 31 inserts, as an input specified character, the currently highlighted conversion candidate at the current input position in the text of the mail (S560), displays the inserted input specified character in a character size corresponding to the currently highlighted software character size key ksz and in a character color corresponding to the currently highlighted software character color key kcl, clears the display of the unspecified character display area 34a and the predicted conversion candidate display area 35a, and returns the process to S510.

According to the above-described configuration, the attribute of each character to be input can be easily changed by utilizing the software character size keys ksz and the software character color keys kcl.

In the state shown in Fig. 34, it is difficult for the user to directly tap a conversion candidate. This is because the predicted conversion candidate display area 35a is displayed at the center in the direction of the long side SL of the display screen S. However, the software selection keys ke are arranged laterally in the direction of the long side SL of the display screen S. This allows the user to easily select a conversion candidate by utilizing these keys.

The user may select a conversion candidate by directly tapping the conversion candidate, as a matter of course.

Although, as shown in Fig. 32, the software selection keys ke are displayed on both sides in the direction of the long side SL of the display screen S, the software selection key may be displayed on only one side.

(Third input interface example)

A third input interface example will be described below. Components corresponding to the components of the second exemplary embodiment described above are denoted by the same reference numerals as a rule.

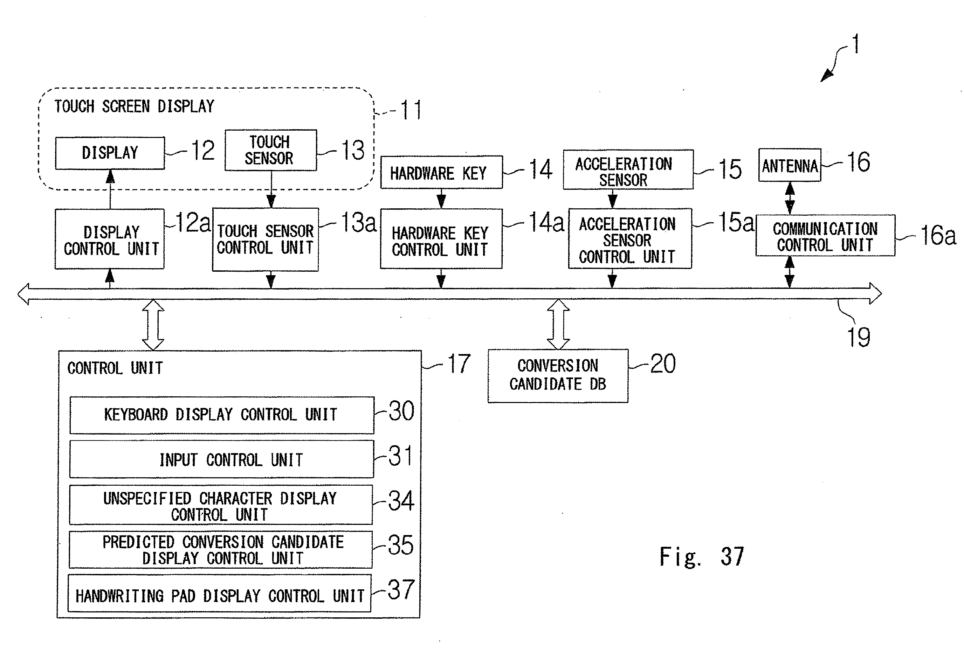

As shown in Fig. 37, the tablet computer 1 includes the display 12 (display means), the display control unit 12a, the touch sensor 13 (operation detection means), the touch sensor control unit 13a, the hardware keys 14, the hardware key control unit 14a, the acceleration sensor 15 (position detection means), the acceleration sensor control unit 15a, the antenna 16, the communication control unit 16a, the control unit 17, the bus 19, and the conversion candidate DB 20.

The display 12 is connected to the bus 19 via the display control unit 12a. The touch sensor 13 is connected to the bus 19 via the touch sensor control unit 13a. Each hardware key 14 is connected to the bus 19 via the hardware key control unit 14a. The acceleration sensor 15 is connected to the bus 19 via the acceleration sensor control unit 15a. The antenna 16 is connected to the bus 19 via the communication control unit 16a. The control unit 17 is connected to the bus 19. The conversion candidate DB 20 is connected to the bus 19.

The touch screen display 11 includes the display 12 and the touch sensor 13.

The display 12 includes the display screen S capable of displaying characters, images, and the like. In this exemplary embodiment, the display screen S of the display 12 is formed in a rectangular shape with an aspect ratio of about 1.4, and has long sides SL and short sides SS. The display 12 is, for example, an LCD (Liquid Crystal Display), an organic EL (ElectroLuminescence) display, or an inorganic EL display.

The display control unit 12a causes characters, images, and the like to be displayed on the display screen S of the display 12 based on the image signal from the control unit 17.

The touch sensor 13 detects a user operation on the display screen S of the display 12. In this exemplary embodiment, a projected capacitive touch sensor capable of detecting multiple touches is used as the touch sensor 13. However, with the recent development in technology, surface capacitive and resistive touch sensors capable of detecting multiple touches have also been realized. Accordingly, a front capacitive or resistive touch sensor may be used as the touch sensor 13, instead of the projected capacitive touch sensor.

Examples of the user operation on the display screen S of the display 12, which is detected by the touch sensor 13, include touching operations performed by the user on the display screen S of the display 12. The touching operations performed by the user are mainly classified as follows.

Tap (single tap): A touching operation in which the user taps the display screen S of the display 12 with a finger. This operation is equivalent to a click with a mouse.

Double-tap: A touching operation in which the user taps the screen twice during a short period of time. This operation is equivalent to a double-click with a mouse.

Drag: A touching operation in which the user moves his/her finger in the state where the finger is in contact with the display screen S of the display 12.

Flick: A touching operation in which the user flicks the display screen S with a finger in the state where the finger is in contact with the display screen S of the display 12.

Pinch: A touching operation in which the user operates the display screen S of the display 12 with two fingers at the same time.

Pinch-out: A touching operation in which the user spreads two fingers apart in the state where the two fingers are in contact with the display screen S of the display 12.

Pinch-in: A touching operation in which the user brings two fingers close to each other in the state where the two fingers are in contact with the display screen S of the display 12.

Examples of "sliding operation" include the above-mentioned "drag", "flick", and "pinch" operations.

The touch sensor control unit 13a generates a touch signal based on the content of the user operation on the display screen S of the display 12, which is detected by the touch sensor 13, and outputs the generated touch signal to the control unit 17.

As shown in Fig. 2, the housing 10 of the tablet computer 1 is provided with, for example, three hardware keys 14. When any one of the hardware keys 14 is pressed, the hardware key control unit 14a generates a press-down signal corresponding to the pressed hardware key 14, and outputs the generated press-down signal to the control unit 17.

The acceleration sensor 15 detects the position of the display screen S of the display 12. The acceleration sensor 15 is composed of, for example, a three-axis acceleration sensor. The acceleration sensor control unit 15a generates a position signal based on the position of the display screen S of the display 12, which is detected by the acceleration sensor 15, and outputs the generated position signal to the control unit 17.

The communication control unit 16a generates a signal by encoding data output from the control unit 17, and outputs the generated signal from the antenna 16. Further, the communication control unit 16a generates data by decoding the signal received from the antenna 16, and outputs the generated data to the control unit 17.

The control unit 17 is composed of a computer including a CPU (Central Processing Unit), a ROM (Read Only Memory), and a RAM (Random Access Memory). The ROM stores a program. The program is loaded into the CPU and executed on the CPU, thereby allowing hardware, such as the CPU, to function as the keyboard display control unit 30 (software keyboard display control means), the input control unit 31 (input control means), the unspecified character display control unit 34 (unspecified character display control means), the predicted conversion candidate display control unit 35 (predicted conversion candidate display control means), and a handwriting pad display control unit 37 (handwritten character input unit display control means).

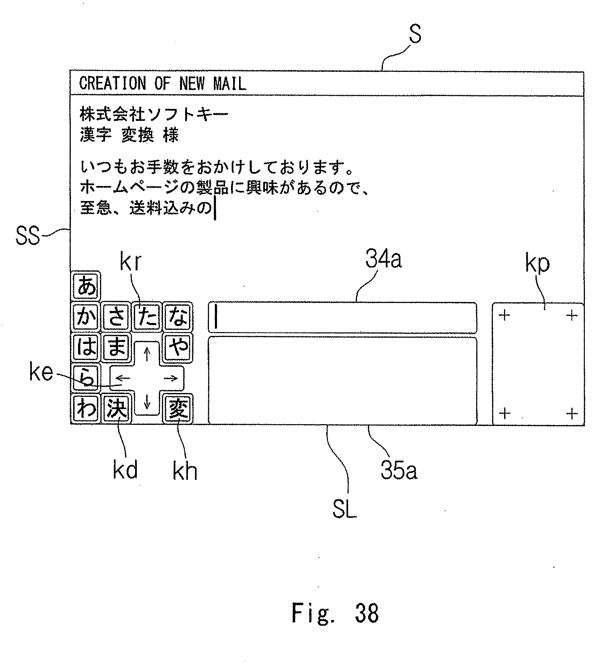

As shown in Fig. 38, the keyboard display control unit 30 displays, on the display screen S, a plurality of software initial keys kr corresponding to initial characters in each column of a syllabary, one software selection key ke, one software determination key kd, one software conversion key kh, and a handwriting pad kp (handwritten character input unit). Specifically, as shown in Fig. 38, assuming that the display screen S is laterally positioned (the short sides SS are parallel to the vertical direction), the keyboard display control unit 30 displays, on the left side on the display screen S, a plurality of software initial keys kr, one software selection key ke, one software determination key kd, and one software conversion key kh. The keyboard display control unit 30 displays the handwriting pad kp on the right side on the display screen S.

The handwriting pad kp is a pad for the user to input characters and the like in handwriting.

The input control unit 31 performs various processes based on the touch signal output from the touch sensor control unit 13a.

The unspecified character display control unit 34 displays the characters and the like, which are input by the software initial keys kr or the handwriting pad kp, in the unspecified character display area 34a on the display screen S. The unspecified character display area 34a is disposed between the plurality of software initial keys kr and the handwriting pad kp.

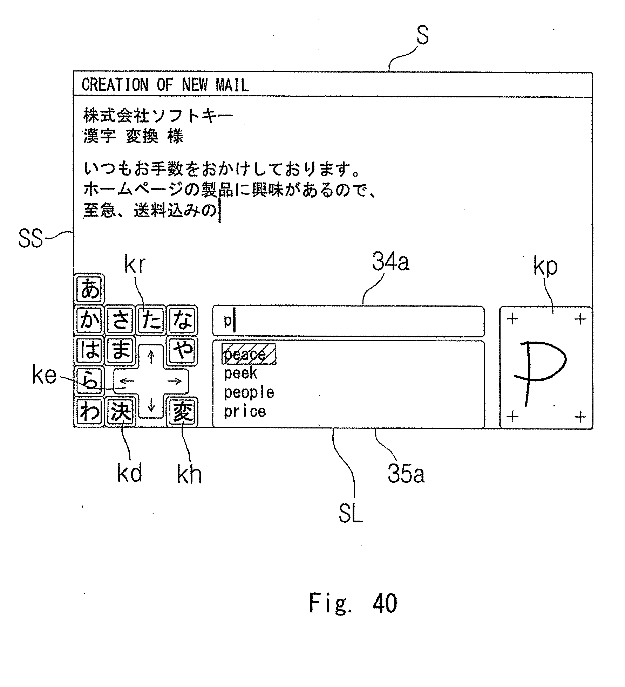

The predicted conversion candidate display control unit 35 refers to the conversion candidate DB 20 to acquire, from the conversion candidate DB 20, a plurality of conversion candidates corresponding to the unspecified character or the like displayed on the display screen S by the unspecified character display control unit 34. Further, as shown in Fig. 40, the predicted conversion candidate display control unit 35 displays the acquired conversion candidates in the predicted conversion candidate display area 35a on the display screen S. The predicted conversion candidate display area 35a is disposed between the plurality of software initial keys kr and the handwriting pad kp.

The conversion candidate DB 20 is a database that stores conversion candidate information for Hiragana and conversion candidate information for alphabet. The conversion candidate information for Hiragana is information on a correspondence relation between Hiragana characters and Chinese characters, the pronunciation of which is indicated by the Hiragana characters. The conversion candidate information for alphabet is information on a correspondence relation between alphabetic characters and English words including the alphabetic characters.

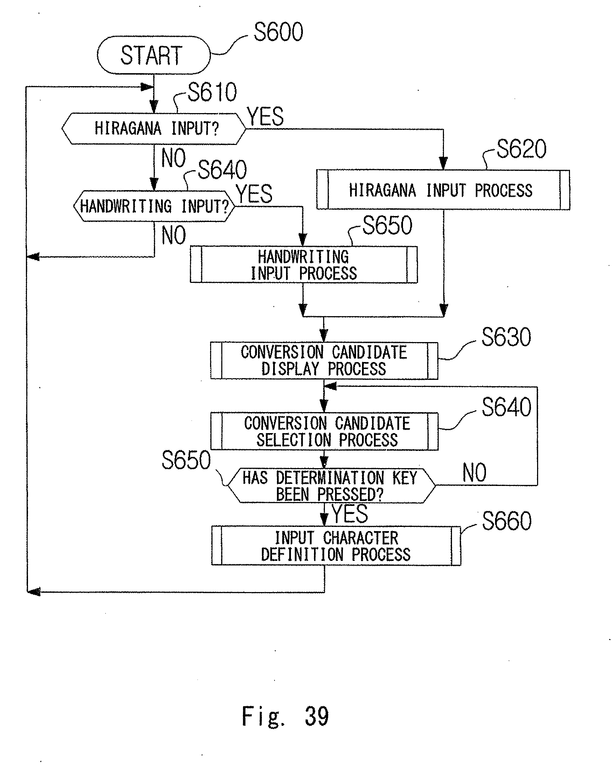

Next, the operation of the tablet computer 1 will be described with reference to the control flow shown in Fig. 39.

First, Fig. 38 shows a state where the tablet computer 1 is powered on to start e-mail software and the user is creating a new mail (S600). Referring to Fig. 38, the display screen S is laterally positioned (the short sides SS are parallel to the vertical direction). In this state, the input control unit 31 determines whether any one of the software initial keys kr is tapped (S610).

When the input control unit 31 determines that any one of the software initial keys kr is tapped (S610: YES), the input control unit 31 executes the Hiragana input process (S620). Specifically, the input control unit 31 selects a Hiragana character according to the number of tap operations on each software initial key kr, and the unspecified character display control unit 34 displays the Hiragana character selected by the input control unit 31 in the unspecified character display area 34a on the display screen S, and advances the process to S630.

When the input control unit 31 determines that no software initial keys kr are tapped (S610: NO), the input control unit 31 determines whether there is a handwriting input on the handwriting pad kp (S640). When the input control unit 31 determines that there is a handwriting input on the handwriting pad kp (S640: YES), the input control unit 31 executes a handwriting input process (S650). Specifically, the input control unit 31 selects characters and the like based on lines and dots to be input in handwriting on the handwriting pad kp. In the case of selecting characters and the like based on lines and dots to be input in handwriting on the handwriting pad kp, the input control unit 31 preferably selects characters and the like which cannot be input by the software initial keys kr, in preference to characters which can be input by the software initial keys kr. In the example shown in Fig. 38, only the Hiragana characters can be input by the software initial keys kr. Accordingly, in the case of selecting characters and the like based on lines and dots to be input in handwriting on the handwriting pad kp, the input control unit 31 preferentially generates alphabetic characters (or symbols or numeric characters) as characters other than the Hiragana characters. The unspecified character display control unit 34 displays the alphabetic character selected by the input control unit 31 in the unspecified character display area 34a on the display screen S, and advances the process to S630.

When the unspecified character display control unit 34 displays the Hiragana character or the alphabetic character in the unspecified character display area 34a on the display screen S, the predicted conversion candidate display control unit 35 refers to the conversion candidate DB 20 to acquire a plurality of conversion candidates corresponding to the Hiragana character or the alphabetic character, and displays the plurality of acquired conversion candidates in the predicted conversion candidate display area 35a as shown in Fig. 40 (S630). In this case, the predicted conversion candidate display control unit 35 causes the conversion candidate displayed on the top of the plurality of conversion candidates to be highlighted to indicate the selected state.

Next, when the user taps the software selection key ke, or taps the software conversion key kh, the predicted conversion candidate display control unit 35 causes a conversion candidate, which is different from the currently highlighted conversion candidate, to be highlighted (S640). Specifically, when an up-arrow portion of the software selection key ke is tapped, the predicted conversion candidate display control unit 35 causes the conversion candidate immediately above the currently highlighted conversion candidate to be highlighted. When the software conversion key kh is tapped, the predicted conversion candidate display control unit 35 causes the conversion candidate immediately below the currently highlighted conversion candidate to be highlighted.

The process for selecting a conversion candidate as described above (S640) is continued until the user taps the software determination key kd (S650: NO). When the user taps the software determination key kd (S650: YES), the input control unit 31 inserts, as an input specified character, the currently highlighted conversion candidate at the current input position in the text of the mail (S660), clears the display of the unspecified character display area 34a, and returns the process to S610.

Even when it is determined in S640 that there is no handwriting input on the handwriting pad kp (S640: NO), the input control unit 31 returns the process to S610.

According to the above-described configuration, the number of types of characters that can be input can be considerably increased by utilizing the handwriting pad display control unit 3. In the case of selecting characters and the like based on lines and dots to be input in handwriting on the handwriting pad kp, the input control unit 31 selects characters and the like which cannot be input by the software initial keys kr, in preference to characters which can be input by the software initial keys kr, thereby considerably improving the accuracy of recognizing characters and the like in the case of selecting characters and the like based on lines and dots to be input in handwriting on the handwriting pad kp.

(Fourth input interface example)

A fourth input interface example will be described below. Components corresponding to the components of the second exemplary embodiment described above are denoted by the same reference numerals as a rule.

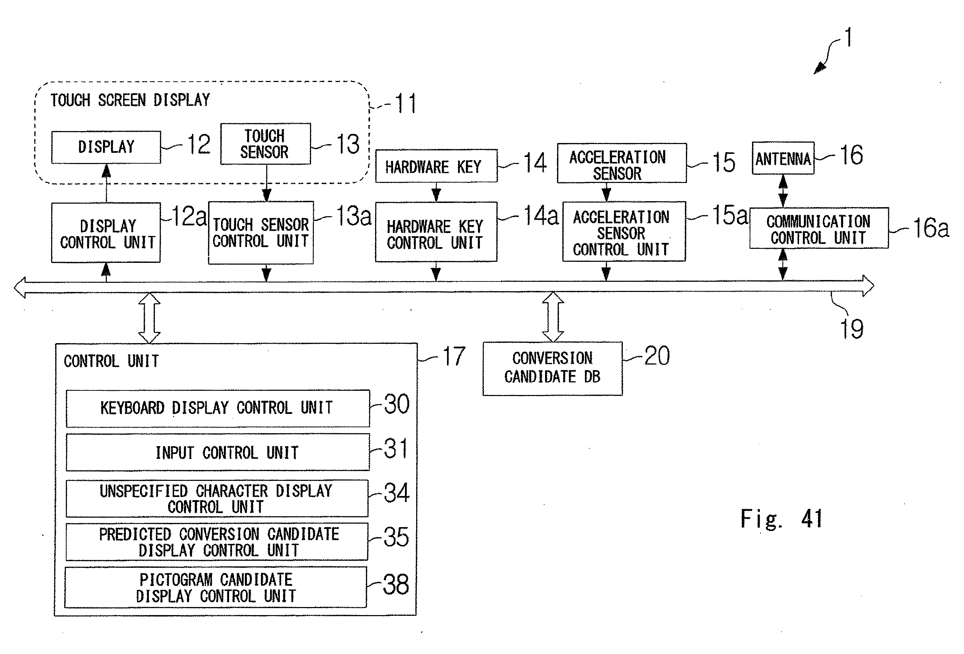

As shown in Fig. 41, the tablet computer 1 includes the display 12 (display means), the display control unit 12a, the touch sensor 13 (operation detection means), the touch sensor control unit 13a, the hardware keys 14, the hardware key control unit 14a, the acceleration sensor 15 (position detection means), the acceleration sensor control unit 15a, the antenna 16, the communication control unit 16a, the control unit 17, the bus 19, and the conversion candidate DB 20.

The display 12 is connected to the bus 19 via the display control unit 12a. The touch sensor 13 is connected to the bus 19 via the touch sensor control unit 13a. Each hardware key 14 is connected to the bus 19 via the hardware key control unit 14a. The acceleration sensor 15 is connected to the bus 19 via the acceleration sensor control unit 15a. The antenna 16 is connected to the bus 19 via the communication control unit 16a. The control unit 17 is connected to the bus 19. The conversion candidate DB 20 is connected to the bus 19.

The touch screen display 11 includes the display 12 and the touch sensor 13.

The display 12 includes the display screen S capable of displaying characters, images, and the like. In this exemplary embodiment, the display screen S of the display 12 is formed in a rectangular shape with an aspect ratio of about 1.4, and has long sides SL and short sides SS. The display 12 is, for example, an LCD (Liquid Crystal Display), an organic EL (ElectroLuminescence) display, or an inorganic EL display.

The display control unit 12a causes characters, images, and the like to be displayed on the display screen S of the display 12 based on the image signal from the control unit 17.

The touch sensor 13 detects a user operation on the display screen S of the display 12. In this exemplary embodiment, a projected capacitive touch sensor capable of detecting multiple touches is used as the touch sensor 13. However, with the recent development in technology, surface capacitive and resistive touch sensors capable of detecting multiple touches have also been realized. Accordingly, a front capacitive or resistive touch sensor may be used as the touch sensor 13, instead of the projected capacitive touch sensor.

Examples of the user operation on the display screen S of the display 12, which is detected by the touch sensor 13, include touching operations performed by the user on the display screen S of the display 12. The touching operations performed by the user are mainly classified as follows.

Tap (single tap): A touching operation in which the user taps the display screen S of the display 12 with a finger. This operation is equivalent to a click with a mouse.

Double-tap: A touching operation in which the user taps the screen twice during a short period of time. This operation is equivalent to a double-click with a mouse.

Drag: A touching operation in which the user moves his/her finger in the state where the finger is in contact with the display screen S of the display 12.

Flick: A touching operation in which the user flicks the display screen S with a finger in the state where the finger is in contact with the display screen S of the display 12.

Pinch: A touching operation in which the user operates the display screen S of the display 12 with two fingers at the same time.

Pinch-out: A touching operation in which the user spreads two fingers apart in the state where the two fingers are in contact with the display screen S of the display 12.

Pinch-in: A touching operation in which the user brings two fingers close to each other in the state where the two fingers are in contact with the display screen S of the display 12.

Examples of "sliding operation" include the above-mentioned "drag", "flick", and "pinch" operations.

The touch sensor control unit 13a generates a touch signal based on the content of the user operation on the display screen S of the display 12, which is detected by the touch sensor 13, and outputs the generated touch signal to the control unit 17.

As shown in Fig. 2, the housing 10 of the tablet computer 1 is provided with, for example, three hardware keys 14. When any one of the hardware keys 14 is pressed, the hardware key control unit 14a generates a press-down signal corresponding to the pressed hardware key 14, and outputs the generated press-down signal to the control unit 17.

The acceleration sensor 15 detects the position of the display screen S of the display 12. The acceleration sensor 15 is composed of, for example, a three-axis acceleration sensor. The acceleration sensor control unit 15a generates a position signal based on the position of the display screen S of the display 12, which is detected by the acceleration sensor 15, and outputs the generated position signal to the control unit 17.

The communication control unit 16a generates a signal by encoding data output from the control unit 17, and outputs the generated signal from the antenna 16. Further, the communication control unit 16a generates data by decoding the signal received from the antenna 16, and outputs the generated data to the control unit 17.

The control unit 17 is composed of a computer including a CPU (Central Processing Unit), a ROM (Read Only Memory), and a RAM (Random Access Memory). The ROM stores a program. This program is loaded into the CPU and executed on the CPU, thereby allowing hardware, such as the CPU, to function as the keyboard display control unit 30 (software keyboard display control means), the input control unit 31 (input control means), the unspecified character display control unit 34 (unspecified character display control means), the predicted conversion candidate display control unit 35 (predicted conversion candidate display control means), and a pictogram candidate display control unit 38 (pictogram candidate display control means).

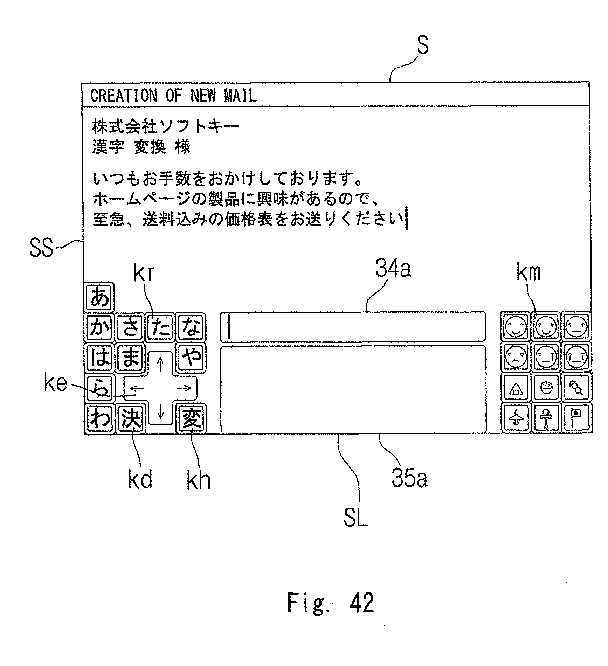

As shown in Fig. 42, the keyboard display control unit 30 displays, on the display screen S, a plurality of software initial keys kr corresponding to initial characters in each column of a syllabary, one software selection key ke, one software determination key kd, one software conversion key kh, and a plurality of software pictogram keys km. Specifically, as shown in Fig. 42, assuming that the display screen S is laterally positioned (the short sides SS are parallel to the vertical direction), the keyboard display control unit 30 displays, on the left side on the display screen S, a plurality of software initial keys kr, one software selection key ke, one software determination key kd, and one software conversion key kh. The keyboard display control unit 30 displays a plurality of software pictogram keys km on the right side on the display screen S.

The software pictogram keys km are software keys for the user to input pictograms.

The input control unit 31 performs various processes based on the touch signal output from the touch sensor control unit 13a.

The unspecified character display control unit 34 displays a Hiragana character input by the software initial keys kr, or a pictogram input by the software pictogram keys km, in the unspecified character display area 34a on the display screen S. The unspecified character display area 34a is disposed between the plurality of software initial keys kr and the plurality of software pictogram keys km.

The predicted conversion candidate display control unit 35 refers to the conversion candidate DB 20 to acquire, from the Hiragana conversion candidate DB 20, a plurality of conversion candidates corresponding to the Hiragana character which is an unspecified character displayed on the display screen S by the unspecified character display control unit 34. Further, the predicted conversion candidate display control unit 35 displays the acquired conversion candidates in the predicted conversion candidate display area 35a on the display screen S. The predicted conversion candidate display area 35a is disposed between the plurality of software initial keys kr and the plurality of software pictogram keys km.

The conversion candidate DB 20 is a database that stores conversion candidate information for Hiragana. The conversion candidate information for Hiragana is information on a correspondence relation between Hiragana characters and Chinese characters, the pronunciation of which is indicated by the Hiragana characters.

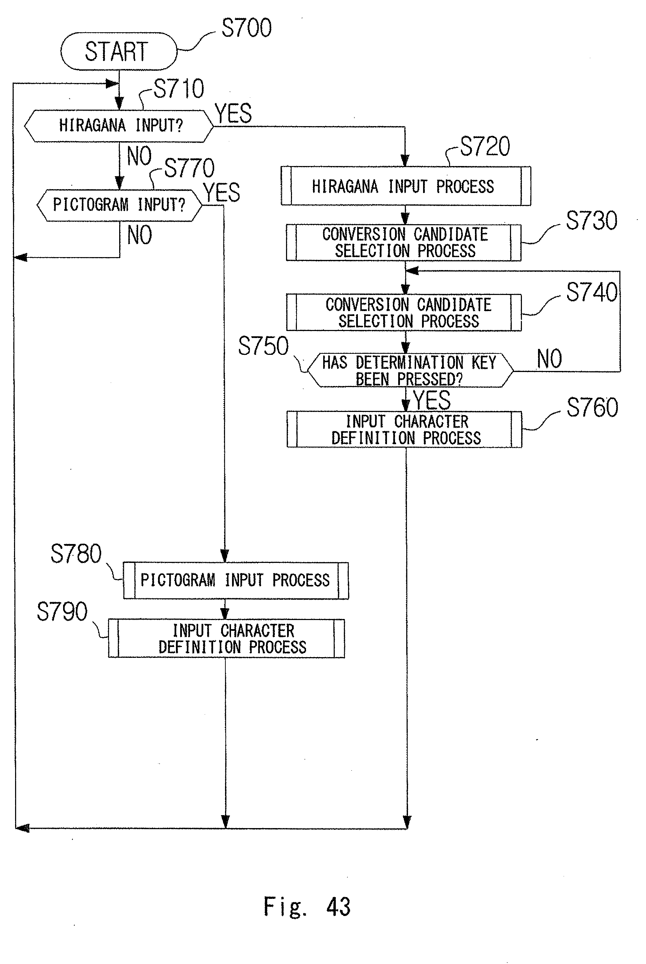

Next, the operation of the tablet computer 1 will be described with reference to the control flow shown in Fig. 43.

First, Fig. 42 shows a state where the tablet computer 1 is powered on to start e-mail software and the user is creating a new mail (S700). Referring to Fig. 42, the display screen S is laterally positioned (the short sides SS are parallel to the vertical direction). In this state, the input control unit 31 determines whether any one of the software initial keys kr is tapped (S710).

When the input control unit 31 determines that any one of the software initial keys kr is tapped (S710: YES), the input control unit 31 executes the Hiragana input process (S720). Specifically, the input control unit 31 selects a Hiragana character according to the number of tap operations on each software initial key kr, and the unspecified character display control unit 34 displays the Hiragana character selected by the input control unit 31 in the unspecified character display area 34a on the display screen S, and advances the process to S730.

When the unspecified character display control unit 34 displays the Hiragana character in the unspecified character display area 34a on the display screen S, the predicted conversion candidate display control unit 35 refers to the conversion candidate DB 20 to acquire a plurality of conversion candidates corresponding to the Hiragana character, and displays the plurality of acquired conversion candidates in the predicted conversion candidate display area 35a (S730). In this case, the predicted conversion candidate display control unit 35 causes the conversion candidate displayed on the top of the plurality of conversion candidates to be highlighted to indicate the selected state.

Next, when the user taps the software selection key ke, or taps the software conversion key kh, the predicted conversion candidate display control unit 35 causes a conversion candidate, which is different from the currently highlighted conversion candidate, to be highlighted (S740). Specifically, when an up-arrow portion of the software selection key ke is tapped, the predicted conversion candidate display control unit 35 causes the conversion candidate immediately above the currently highlighted conversion candidate to be highlighted. When the software conversion key kh is tapped, the predicted conversion candidate display control unit 35 causes the conversion candidate immediately below to the currently highlighted conversion candidate to be highlighted.

The process for selecting a conversion candidate as described above (S740) is continued until the user taps the software determination key kd (S750: NO). When the user taps the software determination key kd (S750: YES), the input control unit 31 inserts, as an input specified character, the currently highlighted conversion candidate at the current input position in the text of the mail (S760), clears the display of the unspecified character display area 34a, and returns the process to S710.

In S710, when the input control unit 31 determines that no software initial keys kr are tapped (S710: NO), the input control unit 31 determines whether any one of the software pictogram keys km is tapped (S770). When the input control unit 31 determines that any one of the software pictogram keys km is tapped (S770: YES), the input control unit 31 executes a pictogram input process (S780). Specifically, the input control unit 31 selects a pictogram according to the tapped software pictogram key km, and the unspecified character display control unit 34 displays the pictogram selected by the input control unit 31 in the unspecified character display area 34a on the display screen S. Further, the input control unit 31 inserts, as an input specified character, the pictogram, which is displayed in the unspecified character display area 34a on the display screen S, at the current input position in the text of the mail (S790), clears the display of the unspecified character display area 34a, and returns the process to S710.

Even when it is determined in S770 that no software pictogram keys km are tapped (S770: NO), the input control unit 31 returns the process to S710.

In the above examples, the program can be stored and provided to a computer using any type of non-transitory computer readable media. Non-transitory computer readable media include any type of tangible storage media. Examples of non-transitory computer readable media include magnetic storage media (such as floppy disks, magnetic tapes, hard disk drives, etc.), optical magnetic storage media (e.g. magneto-optical disks), CD-ROM (Read Only Memory), CD-R, CD-R/W, and semiconductor memories (such as mask ROM, PROM (programmable ROM), EPROM (erasable PROM), flash ROM, RAM (random access memory), etc.). The program may be provided to a computer using any type of transitory computer readable media. Examples of transitory computer readable media include electric signals, optical signals, and electromagnetic waves. Transitory computer readable media can provide the program to a computer via a wired communication line, such as electric wires and optical fibers, or a wireless communication line.

The present invention has been described above with reference to exemplary embodiments, but the present invention is not limited by the above exemplary embodiments. The configuration and details of the present invention can be modified in various manners which can be understood by those skilled in the art within the scope of the invention.

This application is based upon and claims the benefit of priority from Japanese patent application No. 2012-023748, filed on February 7, 2012, the disclosure of which is incorporated herein in its entirety by reference.

Reference Signs List

1    TABLET COMPUTER
11    TOUCH SCREEN DISPLAY
12    DISPLAY
13    TOUCH SENSOR
17    CONTROL UNIT
18    STORAGE UNIT
30    KEYBOARD DISPLAY CONTROL UNIT

**Claims**

**1.** An information processing device comprising:

display means including a display screen;
operation detection means for detecting a user operation on the display screen; and
software keyboard display control means for causing a software keyboard including a plurality of software keys to be displayed on the display screen,
wherein the software keyboard display control means divides the software keyboard, displays the divided software keyboard on the display screen, and controls a display form of a division display of the software keyboard based on the operation detected by the operation detection means.

2. The information processing device according to Claim 1, wherein the software keyboard display control means determines a division boundary location of the software keyboard based on the operation detected by the operation detection means.

3. The information processing device according to Claim 1, wherein
the software keyboard display control means displays the software keyboard on the display screen in such a manner that at least one of the plurality of software keys is included in all of a plurality of software key groups obtained after the division, and
the software keyboard display control means determines the at least one software key included in all of the plurality of software key groups, based on the operation detected by the operation detection means.

4. The information processing device according to Claim 1, wherein the software keyboard display control means determines a display size of the software keyboard based on the operation detected by the operation detection means.

5. The information processing device according to Claim 4, wherein the operation is a sliding operation.

6. The information processing device according to Claim 1, further comprising position detection means for detecting a position of the display screen,
wherein the software keyboard display control means chooses to display the software keyboard in an integrated manner on the display screen, or to divide and display the software keyboard on the display screen, depending on the position of the display screen detected by the position detection means.

7. The information processing device according to Claim 1, further comprising position detection means for detecting a position of the display screen,
wherein when the position of the display screen detected by the position detection means is a first position, the software keyboard display control means displays the software keyboard in an integrated manner on the display screen, or divides and displays the software keyboard on the display screen, and
when the position of the display screen is a second position, the software keyboard display control means displays the software keyboard in an integrated manner on the display screen.

8. The information processing device according to Claim 1, further comprising position detection means for detecting a position of the display screen,
wherein the software keyboard display control means chooses to vertically arrange or to laterally arrange a plurality of software key groups obtained after the division on the display screen, depending on the position of the display screen detected by the position detection means.

9. The information processing device according to any one of Claims 1 to 8, further comprising display form information storage means for storing display form information that specifies a display form of a division display of the software keyboard,
wherein the software keyboard display control means determines the display form of the division display of the software keyboard based on the display form information stored in the display form information storage means, when the software keyboard is divided and displayed on the display screen.

10. The information processing device according to any one of Claims 1 to 9, wherein the user operation on the display screen is a touching operation performed by a user on the display screen, or an approaching operation performed by the user on the display screen.

11. A display form control method for an information processing device including: display means including a display screen; and operation detection means for detecting a user operation on the display screen, the display form control method comprising:

controlling a display form of a division display of a software keyboard including a plurality of software keys based on the operation detected by the operation detection means, when the software keyboard is divided and displayed on the display screen.

12. A non-transitory computer readable medium storing a display form control program for an information processing device including: display means including a display screen; and operation detection means for detecting a user operation on the display screen, the display form control program causing a computer to control a display form of a division display of a software keyboard including a plurality of software keys based on the operation detected by the operation detection means, when the software keyboard is divided and displayed on the display screen.

Fig. 1

TABLET COMPUTER                          1

DISPLAY                    2

TOUCH SENSOR                3

KEYBOARD DISPLAY CONTROL UNIT     4

Fig. 2                                    1

S(12)      10

11

SL

SS      14    14    14

EP 2 813 936 A1

Fig. 3

26

X

S

CREATION OF NEW MAIL

y

Dear Sir or Madam:

I saw your product on your website.
Could you send me a price list,
including shipp|

SL

SK

k                    k

| ESC | Q | W | E | R | T | Y | U | I | O | P | '[ | ] | DEL |

| CNTL | A | S | D | F | G | H | J | K | L | ; | ' | RETURN |

| SHIFT | Z | X | C | V | B | N | M | < | > | / | SHIFT |

| ALT | | ▼ |

SS

Fig. 4

18

| BOUNDARY LOCATION INFORMATION | (null) | ~32 |
| DISPLAY SIZE INFORMATION | 100 | ~33 |

Fig. 5

Fig. 6

Ⓐ

S200      IS THERE TAP OPERATION?    YES    S210

CHARACTER INPUT PROCESS

NO

S220    IS SCREEN VERTICALLY POSITIONED?   YES    S230

NO

DISPLAY KEYBOARD IN INTEGRATED MANNER
ALONG SHORT SIDE OF DISPLAY SCREEN

S240   NO   IS THERE PINCH OPERAION?

Ⓑ

S250   YES

STORE
DISPLAY SIZE INFORMATION

UPDATE DISPLAY   S260

Fig. 7

S

y

CREATION OF NEW MAIL

Dear Sir or Madam:

I saw your product on your website.
Could you send me a price list,
including shipp|

X

SK

SS

k                    k

| ESC | Q | W | E | R. | T | Y | U | I | O | P | [ | ] | DEL |
| CNTL | A | S | D | F | G | H | J | K | L | : | ' | | RETURN |
| SHIFT | Z | X | C | V | B | N | M | . | , | / | | | SHIFT |
| ALT | | | | | | | | | | | | | |

SL

Fig. 8

S

y

CREATION OF NEW MAIL

Dear Sir or Madam:

I saw your product on your website.
Could you send me a price list,
including shipp|

X

SK

SS

k          k

| ESC | Q | W | E | R | T | Y | U | I | O | P | [ | ] | DEL |
| CNTL | A | S | D | F | G | H | J | K | L | ; | ' | RETURN |
| SHIFT | Z | X | C | V | B | N | M | , | . | / | SHIFT |
| ALT | | | |

SL

Fig. 9

18

| BOUNDARY LOCATION INFORMATION | 397 | 32 |
|---|---|---|
| DISPLAY SIZE INFORMATION | 100 | 33 |

Fig. 10

S

y

CREATION OF NEW MAIL

Dear Sir or Madam:

I saw your product on your website.
Could you send me a price list,
including shipp|

X

SS

SK

SKR

SKL

k

k

| ESC | Q | W | E | R |
| CNTL | A | S | D | F |
| SHIFT | Z | X | C | V |
| ALT | | |

| T | Y | U | I | O | P | [ | ] | DEL |
| G | H | J | K | L | ; | ' | RETURN |
| B | N | M | < | > | / | SHIFT |
| | |

SL

Fig. 11

Fig. 12

S
y

CREATION OF NEW MAIL

Dear Sir or Madam:

I saw your product on your website.
Could you send me a price list,
including shipp|

X

SS

SK
SKR

SKL

k

k

| ESC | Q | W | E | R |
| CNTL | A | S | D | F |
| SHIFT | Z | X | C | V |
| ALT | | |

○→          ←○

| T | Y | U | I | O | P | [ | ] | DEL |
| G | H | J | K | L | ; | ' | RETURN |
| B | N | M | < | > | / | SHIFT |
| | | |

SL

Fig. 13

18

| BOUNDARY LOCATION INFORMATION | 397 | 32 |
| DISPLAY SIZE INFORMATION | 50 | 33 |

S

y

CREATION OF NEW MAIL

Dear Sir or Madam:

I saw your product on your website.
Could you send me a price list,
including shipp|

X

SK

SKR

SS

SKL

k

k

SL

Fig. 14

S

y

CREATION OF NEW MAIL

Dear Sir or Madam:

I saw your product on your website.
Could you send me a price list,
including shipp|

X

SK

SS

k                    k

| ESC | Q | W | E | R | T | Y | U | I | O | P | [ | ] | DEL |
| CNTL | A | S | D | ← | G | H | J | K | L | ; | ' | RETURN |
| SHIFT | Z | X | C | V | B | N | M | , | . | / | SHIFT |
| ALT | | | |

SL

Fig. 15

36

S

y

**CREATION OF NEW MAIL**

Dear Sir or Madam:

I saw your product on your website.
Could you send me a price list,
including shipp|

X

SK

SS

k                    k

| ESC | Q | W | E | R | T | Y | U | I | O | P | [ | ] | DEL |
| CNTL | A | S | ⬅⊙F | G | ⊙➡ | J | K | L | : | ' | RETURN |
| SHIFT | Z | X | C | V | B | N | M | , | . | / | SHIFT |
| ALT | | | | | ⬚ |

SL

Fig. 16

START —S101                    (B)

S111
IS THERE TAP OPERATION?  YES
                              S121
NO              CHARACTER INPUT PROCESS

YES —S131
IS SCREEN VERTICALLY POSITIONED?
NO

DISPLAY KEYBOARD IN INTEGRATED MANNER —S141
ALONG LONG SIDE OF DISPLAY SCREEN

YES
IS THERE —S151
BOUNDARY LOCATION INFORMATION?
NO

S161
IS THERE PINCH-OUT OPERATION?  NO
YES

STORE —S171
BOUNDARY LOCATION INFORMATION

UPDATE —S181
DISPLAY

(A)

Fig. 17

18

| OVERLAPPING RANGE LEFT-END LOCATION INFORMATION | (null) | ~32a |
|---|---|---|
| OVERLAPPING RANGE RIGHT-END LOCATION INFORMATION | (null) | ~33b |
| DISPLAY SIZE INFORMATION | 100 | ~33 |

Fig. 18

START ⌐S102

Ⓑ

S112

IS THERE TAP OPERATION? — YES ⌐S122

NO

CHARACTER INPUT PROCESS

⌐S132

YES / IS SCREEN VERTICALLY POSITIONED?

NO

DISPLAY KEYBOARD IN INTEGRATED MANNER
ALONG LONG SIDE OF DISPLAY SCREEN ⌐S142

YES / IS THERE
OVERLAPPING RANGE INFORMATION? ⌐S152

NO

⌐S162

IS THERE PINCH-OUT OPERATION? — NO

YES ⌐S172

STORE
OVERLAPPING RANGE INFORMATION

UPDATE
DISPLAY ⌐S182

Ⓐ

Fig. 19

Fig. 20

Fig. 21

CREATION OF NEW MAIL

Dear Sir or Madam:

.I saw your product on your website.
Could you send me a price list,
including shipp|

ESC | Q | W | E | R | T | Y | U | I | O | P | [ | ] | DEL

CNTL | A | S | ⬅⃝F | G | ⃝➡ | J | K | L | ; | ' | RETURN

SHIFT | Z | X | C | V | B | N | M | , | . | / | SHIFT

ALT

Fig. 22

18

| OVERLAPPING RANGE LEFT-END LOCATION INFORMATION | 420 | ~ 32a |
|---|---|---|
| OVERLAPPING RANGE RIGHT-END LOCATION INFORMATION | 380 | ~ 33b |
| DISPLAY SIZE INFORMATION | 100 | ~ 33 |

S

y

## CREATION OF NEW MAIL

Dear Sir or Madam:

I saw your product on your website.
Could you send me a price list,
including shipp|

X

SS

SK

SKR

SKL

k

k

| ESC | Q | W | E | R | T | | R | T | Y | U | I | O | P | [ | ] | DEL |
| CNTL | A | S | D | F | G | | F | G | H | J | K | L | : | ' | RETURN |
| SHIFT | Z | X | C | V | B | | V | B | N | M | < | > | / | SHIFT |
| ALT | | | | | | | |

SL

Fig. 23

S

X

**CREATION OF NEW MAIL**

Dear Sir or Madam:

y

I saw your product on your website.
Could you send me a price list,
including shipp|

SK

SKR

k

| R | T | Y | U | I | O | P | [ | ] | DEL |
| F | G | H | J | K | L | ; | ' | RETURN |
| V | B | N | M | < | > | / | SHIFT |

SL

SKL

k

| ESC | Q | W | E | R | T |
| CNTL | A | S | D | F | G |
| SHIFT | Z | X | C | V | B |
| ALT | |

SS

Fig. 24

Fig. 25

EP 2 813 936 A1

S

CREATION OF NEW MAIL

株式会社ソフトキー
漢字 変換 様

いつもお手数をおかけしております。
ホームページの製品に興味があるので、
至急、送料込みの|

SS

ks

34a

kb

| か | さ | た | な |
| は | ま | ↑ | や |
| ら | ← | → |  |
| わ | 決 | ↓ | 変 |

| あ | い | う |
| え | ↑ | お |
|  | ← | → |
| 決 | ↓ | 変 |

ke

ke

kd    kh

kd    kh

35a

SL

Fig. 26

START ⟶ S400

HIRAGANA INPUT PROCESS ⟶ S410

CONVERSION CANDIDATE DISPLAY PROCESS ⟶ S420

CONVERSION CANDIDATE SELECTION PROCESS ⟶ S430

S440 — HAS DETERMINATION KEY BEEN PRESSED? NO

YES

INPUT CHARACTER DEFINITION PROCESS ⟶ S450

Fig. 27

CREATION OF NEW MAIL

株式会社ソフトキー
漢字 変換 様

いつもお手数をおかけしております。
ホームページの製品に興味があるので、
至急、送料込みの

SS

ks    34a    kb

か    さ    た    な    | か|    あ    い    う
は    ま    ↑    や              え    ↑    お
ke    ら    ←    →              抱える    ←    →    ke
わ    決    ↓    変    抱え込む    決    ↓    変
                      価格
kd    kh              価格表    kd    kh
                      35a
              SL

Fig. 28

S

CREATION OF NEW MAIL

株式会社ソフトキー
漢字 変換 様

いつもお手数をおかけしております。
ホームページの製品に興味があるので、
至急、送料込みの|

SS

ks

34a

kb

| か | さ | た | な |

か|

あ | い | う

| は | ま | | や | | ↑ | | え | | | | ↑ | | お |

ke

抱える
抱え込む
価格
価格表

| ← | | → | | ← | | → |

ke

| ら |

| わ | 決 | | ↓ | | 変 | | 決 | | ↓ | | 変 |

kd    kh

35a

kd    kh

SL

Fig. 29

CREATION OF NEW MAIL

株式会社ソフトキー
漢字 変換 様

いつもお手数をおかけしております。
ホームページの製品に興味があるので、
至急、送料込みの価格表

かさたな
はまや
ら
わ決変

あいう
えお
決変

Fig. 30

Fig. 31

TOUCH SCREEN DISPLAY 11

DISPLAY 12

TOUCH SENSOR 13

DISPLAY CONTROL UNIT 12a

TOUCH SENSOR CONTROL UNIT 13a

HARDWARE KEY 14

HARDWARE KEY CONTROL UNIT 14a

ACCELERATION SENSOR 15

ACCELERATION SENSOR CONTROL UNIT 15a

ANTENNA 16

COMMUNICATION CONTROL UNIT 16a

19

CONVERSION CANDIDATE DB 20

CONTROL UNIT 17

KEYBOARD DISPLAY CONTROL UNIT 30

INPUT CONTROL UNIT 31

UNSPECIFIED CHARACTER DISPLAY CONTROL UNIT 34

PREDICTED CONVERSION CANDIDATE DISPLAY CONTROL UNIT 35

CHARACTER PROPERTY DISPLAY CONTROL UNIT 36

1

S

CREATION OF NEW MAIL

株式会社ソフトキー
漢字 変換 様

いつもお手数をおかけしております。
ホームページの製品に興味があるので、
至急、送料込みの|

SS

kr

34a

ksz

あ

か さ た な

は ま や

ら ← →

わ 決 ↑ ↓ 変

大 中 小

黒 ↑ 赤

← →

青 ↓ 緑

ke

kd    kh

35a

kcl

SL

Fig. 32

52

START — S500

HIRAGANA INPUT PROCESS — S510

CONVERSION CANDIDATE DISPLAY PROCESS — S520

CONVERSION CANDIDATE SELECTION PROCESS — S530

CHARACTER PROPERTY CHANGING PROCESS — S540

S550 — HAS DETERMINATION KEY BEEN PRESSED? — NO

YES

INPUT CHARACTER DEFINITION PROCESS — S560

Fig. 33

S

CREATION OF NEW MAIL

株式会社ソフトキー
漢字 変換 様

いつもお手数をおかけしております。
ホームページの製品に興味があるので、
至急、送料込みの

SS

kr

あ

か さ た な

は ま や

ら ← ↑ →

わ 決 ↓ 変

kd  kh

34a

か

抱える
抱え込む
価格
価格表

35a

SL

ksz

大 中 小

黒 赤

← ↑ →

青 ↓ 緑

kcl

ke

Fig. 34

S

CREATION OF NEW MAIL

株式会社ソフトキー
漢字 変換 様

いつもお手数をおかけしております。
ホームページの製品に興味があるので、
至急、送料込みの

SS

kr

34a

ksz

| か | さ | た | な |

か

| 大 | 中 | 小 |

| は | ま |   | や |

抱える
抱え込む
価格
価格表

| 黒 |   | 赤 |

ke

| ら | ← | → |

| ← | → |

| わ | 決 |   | 変 |

| 青 |   | 緑 |

kd  kh

35a

kcl

SL

Fig. 35

S

CREATION OF NEW MAIL

株式会社ソフトキー
漢字 変換 様

いつもお手数をおかけしております。
ホームページの製品に興味があるので、
至急、送料込みの **価格表**|

SS

kr

あ

か さ た な

は ま や
↑
ら ← →
↓
わ 決 変

kd  kh

34a

ksz

大 中 小

黒 赤
↑
← →
↓
青 緑

kcl

ke

SL

35a

Fig. 36

EP 2 813 936 A1

TOUCH SCREEN DISPLAY ‑‑11

| DISPLAY | ‑12 | TOUCH SENSOR | ‑13 |

HARDWARE KEY ‑14

ACCELERATION SENSOR ‑15

ANTENNA ‑16

DISPLAY CONTROL UNIT ‑12a

TOUCH SENSOR CONTROL UNIT ‑13a

HARDWARE KEY CONTROL UNIT ‑14a

ACCELERATION SENSOR CONTROL UNIT ‑15a

COMMUNICATION CONTROL UNIT ‑16a

19

CONTROL UNIT ‑17

CONVERSION CANDIDATE DB ‑20

KEYBOARD DISPLAY CONTROL UNIT ‑30

INPUT CONTROL UNIT ‑31

UNSPECIFIED CHARACTER DISPLAY CONTROL UNIT ‑34

PREDICTED CONVERSION CANDIDATE DISPLAY CONTROL UNIT ‑35

HANDWRITING PAD DISPLAY CONTROL UNIT ‑37

1

Fig. 37

S

CREATION OF NEW MAIL

株式会社ソフトキー
漢字 変換 様

いつもお手数をおかけしております。
ホームページの製品に興味があるので、
至急、送料込みの|

SS

kr

34a

kp

あ

か さ た な

は ま や

ら ← ↑ →
↓

わ 決 変

ke

kd    kh

35a

SL

Fig. 38

Fig. 39

CREATION OF NEW MAIL

株式会社ソフトキー
漢字 変換 様

いつもお手数をおかけしております。
ホームページの製品に興味があるので、
至急、送料込みの|

S

SS

kr

あ
か さ た な
は ま ↑ や
ら ← →
わ 決 ↓ 変

ke

kd    kh

34a

p|

peace
peek
people
price

35a

SL

kp

+       +

P

+       +

Fig. 40

Fig. 41

EP 2 813 936 A1

EP 2 813 936 A1

CREATION OF NEW MAIL

株式会社ソフトキー
漢字 変換 様

いつもお手数をおかけしております。
ホームページの製品に興味があるので、
至急、送料込みの価格表をお送りください|

SS

kr

あ
か さ た な
は ま や
ら ← →
わ 決 変

ke

kd  kh

34a

km

35a

SL

Fig. 42

62

START ~S700

S710

HIRAGANA INPUT? — YES

NO ~S770

PICTOGRAM INPUT? — YES

NO

S720

HIRAGANA INPUT PROCESS

CONVERSION CANDIDATE
SELECTION PROCESS — S730

CONVERSION CANDIDATE
SELECTION PROCESS — S740

S750

HAS DETERMINATION KEY
BEEN PRESSED? — NO

YES

INPUT CHARACTER
DEFINITION PROCESS — S760

S780

PICTOGRAM INPUT PROCESS

S790

INPUT CHARACTER
DEFINITION PROCESS

Fig. 43

| International application No. |
| --- |
| PCT/JP2012/007905 |

A. CLASSIFICATION OF SUBJECT MATTER
*G06F3/0488*(2013.01)i, *G06F3/023*(2006.01)i, *G06F3/041*(2006.01)i, *H03M11/04* (2006.01)i

According to International Patent Classification (IPC) or to both national classification and IPC

B. FIELDS SEARCHED

Minimum documentation searched (classification system followed by classification symbols)
G06F3/0488, G06F3/023, G06F3/041, H03M11/04

Documentation searched other than minimum documentation to the extent that such documents are included in the fields searched
Jitsuyo Shinan Koho          1922–1996   Jitsuyo Shinan Toroku Koho   1996–2013
Kokai Jitsuyo Shinan Koho    1971–2013   Toroku Jitsuyo Shinan Koho   1994–2013

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>A | JP 09-330175 A  (Hitachi, Ltd.),<br>22 December 1997 (22.12.1997),<br>paragraphs [0080] to [0083]; fig. 19 to 20<br>(Family: none) | 1,9-12<br>2 |
| P,X | WO 2012/061569 A1  (APPLE INC.),<br>10 May 2012 (10.05.2012),<br>paragraphs [00190] to [00201]; fig. 5A to 5K<br>& US 2012/0113007 A1 | 1-2,10-12 |

☐ Further documents are listed in the continuation of Box C.     ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 01 March, 2013 (01.03.13) | 12 March, 2013 (12.03.13) |

| Name and mailing address of the ISA/<br>Japanese Patent Office | Authorized officer |
| --- | --- |
| Facsimile No. | Telephone No. |

Form PCT/ISA/210 (second sheet) (July 2009)

## INTERNATIONAL SEARCH REPORT

International application No.

PCT/JP2012/007905

**Box No. II       Observations where certain claims were found unsearchable (Continuation of item 2 of first sheet)**

This international search report has not been established in respect of certain claims under Article 17(2)(a) for the following reasons:

1. ☐ Claims Nos.:
   because they relate to subject matter not required to be searched by this Authority, namely:

2. ☐ Claims Nos.:
   because they relate to parts of the international application that do not comply with the prescribed requirements to such an extent that no meaningful international search can be carried out, specifically:

3. ☐ Claims Nos.:
   because they are dependent claims and are not drafted in accordance with the second and third sentences of Rule 6.4(a).

**Box No. III       Observations where unity of invention is lacking (Continuation of item 3 of first sheet)**

This International Searching Authority found multiple inventions in this international application, as follows:
   The inventions in claims 1, 2 and 9 to 12, the invention in claim 3, the inventions in claims 4 and 5, the invention in claim 6, the invention in claim 7 and the invention in claim 8 have a common technical feature of "splitting a software keyboard so as to display it on a display screen, and also controlling a displaying manner of split display of the software keyboard on the basis of user's operation to the display screen".
(Continued to extra sheet)

1. ☐ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☒ No required additional search fees were timely paid by the applicant.   Consequently, this international search report is restricted to the invention first mentioned in the claims; it is covered by claims Nos.:
   1-2 and 9-12

**Remark on Protest**       ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (July 2009)

**INTERNATIONAL SEARCH REPORT**

International application No.

PCT/JP2012/007905

Continuation of Box No.III of continuation of first sheet(2)

However, the above-said technical feature cannot be considered to be a special technical feature, since the technical feature does not make a contribution over the prior art in the light of the contents disclosed in JP 09-330175.

Further, there is no other same or corresponding special technical feature.

Consequently, it is obvious that the inventions of claims 1-12 do not comply with the requirement of unity.

**EP 2 813 936 A1**

## REFERENCES CITED IN THE DESCRIPTION

### Patent documents cited in the description

- JP 2011248411 A
- JP 2012023748 A